# EUROPÄISCHE PATENTSCHRIFT

(11) **EP 3 141 922 B1**
(45) Veröffentlichungstag und Bekanntmachung des Hinweises auf die Patenterteilung: **27.05.2020**
(21) Anmeldenummer: 15184942.9
(22) Anmeldetag: 11.09.2015
(51) Int. Cl.: G01S 5/00, G01S 5/02

(54) **VERFAHREN UND VORRICHTUNG ZUR VERBESSERTEN POSITIONSBESTIMMUNG**
METHOD AND APPARATUS FOR IMPROVED POSITIONING
DISPOSITIF ET PROCEDE DE POSITIONNEMENT AMELIORE

(43) Veröffentlichungstag der Anmeldung: 15.03.2017
(73) Patentinhaber: Deutsche Telekom AG, 53113 Bonn (DE)
(72) Erfinder: Witych, Michael, 53227 Bonn (DE); Müller, Dietmar, 53227 Bonn (DE); Welzel, Thomas, 53604 Bad Honnef (DE)
(74) Vertreter: Blumbach · Zinngrebe Patentanwälte PartG mbB

(56) Entgegenhaltungen:
- EP-A1- 2 921 880
- WO-A1-2010/059935
- WO-A1-2012/099903
- WO-A1-2014/180845

## Beschreibung

Die Erfindung betrifft ein Verfahren zur verbesserten Bestimmung der Position einer beweglichen Kommunikationseinrichtung unter Verwendung eines Positionsbestimmungssystems sowie zur Durchführung des Verfahrens ausgebildete Vorrichtungen.

Globale satellitenbasierte Navigationssysteme, welche auch unter der Bezeichnung GNSS (Global Navigation Satellite System) bekannt sind, dienen beispielsweise der Positionsbestimmung und Navigation von mobilen Geräten, beispielsweise von mobilen Funktelefonen, welche einen GPS-Empfänger enthalten. Ein bekanntes GNSS-System ist das GPS (Global Positioning System), also das US-amerikanische NAVSTAR-GPS-System.

Um die durch ein solches Navigationssystem ermittelte Positionsgenauigkeit verbessern zu können, werden Navigations-Ergänzungssysteme eingesetzt, welche Korrekturdaten zur Verbesserung der Positionsinformation und auch Integritätsinformationen bereitstellen können. Integritätsinformationen enthalten zum Beispiel Angaben über die Vertrauenswürdigkeit der in der Vergangenheit bereitgestellten Beobachtungsinformationen zur Positionsberechnung und/oder der berechneten Positionsinformation und/oder Angaben über die Zuverlässigkeit und den ordnungsgemäßen Betrieb des eingesetzten Navigationssystems. Ein bekanntes Navigations-Ergänzungssystem ist beispielsweise ein SBAS (Satellite Based Augmentation System). Solche satellitenbasierten Ergänzungssysteme sind in Europa unter der Bezeichnung EGNOS (European Geostationary Navigation Overlay Satellite System (oder Service)) und in den USA unter der Bezeichnung WAAS (Wide Area Augmentation System) bekannt.

Derartige Navigations-Ergänzungssysteme gewinnen die Korrekturdaten zur Verbesserung der Positionsbestimmung und die Integritätsinformationen zum Beispiel mittels geeignet verteilter ortsfester Bodenstationen mit bekannten Positionen und laufender Bestimmung dieser Positionen mittels Auswertung der Signale der GNSS Satelliten, wie dies bei dem europäischen System EGNOS der Fall ist. Die feste tatsächliche Position der Bodenstation wird einmalig mit hoher Genauigkeit ermittelt und jeweils mit den laufend mittels des Navigationssystems bestimmten Positionen verglichen, um die Korrekturdaten und Integritätsinformationen zu erhalten. Die Korrekturdaten und Integritätsinformationen können auf unterschiedlichen Wegen übertragen werden, zum Beispiel mittels Internet und Mobilfunk oder zum Beispiel alternativ nur über Satellitensignale. Beim EGNOS System werden die Korrektursignale zum Beispiel auch von den geostationären EGNOS Satelliten ausgesendet und können in einem Mobilfunktelefon mit geeigneter Empfangsantenne empfangen werden. Bei EGNOS werden die Korrektursignale zum Beispiel auf L1 gesendet, also einer der von GPS genutzten Frequenzen.

Solche Korrekturwerte und Integritätswerte werden zuerst bestimmt und danach zum Nutzer zum Beispiel entweder über das Internet in Kombination mit Mobilfunk oder aber mittels Satellitensignal auf der Frequenz L1 zum Beispiel zu einem geeigneten Mobilfunktelefon mit zum Beispiel GPS und EGNOS Chip und Software übertragen. Aufgrund der Bestimmungsdauer zur Berechnung der Korrekturwerte und der Zustellungszeit haftet den empfangenen Korrekturwerten ein systembedingter Zeitverzug an. Bei einem EGNOS-System beträgt der Zeitverzug etwa 6 Sekunden. Mit anderen Worten gesprochen, stehen Korrekturwerte, denen im Ergänzungssystem ein Gültigkeitszeitpunkt ta zugeordnet worden ist, erst zu einem späteren Empfangszeitpunkt tb einem GPS-Empfänger beispielsweise einer mobilen Kommunikationseinrichtung zur Verfügung. Deshalb kann eine Verbesserung beziehungsweise Korrektur der Positionsgenauigkeit eines GPS-Empfängers unter Berücksichtigung der Positionszusatzinformationen, erhalten zum Zeitpunkt tb und gültig für den Zeitpunkt ta, nur zum Zeitpunkt ta, also nur für Werte in der Vergangenheit berechnet werden. Demzufolge kann die Positionsgenauigkeit eines GPS-Empfängers aufgrund der SBAS Korrekturwerte nur für in der Vergangenheit ermittelte Positionsinformationen verbessert werden.

In EP 2 921 880 A1 wird beispielsweise ein Verfahren zur verbesserten Bestimmung der aktuellen Position einer beweglichen Kommunikationseinrichtung in Echtzeit beschrieben, wobei in Abhängigkeit von durch ein Navigations-Ergänzungssystem bereitgestellten, einem Zeitpunkt (ta n) zugeordneten Positionszusatzinformationen, von zum Zeitpunkt (ta n) bestimmten Positionsinformationen und von zwischen den Zeitpunkten (ta n) und einem späteren Zeitpunkt (tb n) erfassten Bewegungsdaten im Wesentlichen zum Zeitpunkt (tb n) die aktuelle Position der beweglichen Kommunikationseinrichtung gültig für den aktuellen Zeitpunkt (tb n) in Echtzeit verbessert bestimmt wird, wobei die Positionszusatzinformationen von einem Navigations-Ergänzungssystem mittels geeignet verteilter ortsfester Bodenstationen mit bekannten Positionen bestimmt werden.

Die Signalstärke der von Satelliten empfangbaren Signale nimmt Indoor, d.h. innerhalb von Gebäuden, schnell ab, so dass ein GNSS-System wie GPS zur Indoor-Positionsbestimmung in der Regel nicht einsetzbar ist. Zur Erhöhung der Signalverfügbarkeit eines GNSS-Systems ist der Einsatz sogenannter Pseudoliten bekannt, um die Satelliten zu ergänzen oder zu ersetzen. Ein Pseudolit ist ein am Boden angeordneter Sender, welcher Signale aussendet, die die Signale eines Satelliten nachahmen, so dass der GPS-Empfänger von einem Pseudoliten empfangene Signale so auswertet, als seien diese von einem Satelliten empfangen worden. Der Einsatz von Pseudoliten ist jedoch mit hohen Kosten verbunden, aufwendig und zudem aufgrund der Verwendung von für Satelliten reservierten Frequenzen problematisch.

Es sind ferner WLAN-basierte Positionsbestimmungs-Systeme bekannt, wobei WLAN (Wireless Local Area Network) ein lokales Funknetz bezeichnet, insbesondere basierend auf dem Standard IEEE 802.11, bei welchem zur Signalübertragung hauptsächlich Frequenzen im 2,4 GHz-Band verwendet werden. Die Positionsbestimmung innerhalb eines WLAN-Netzes erfolgt typischerweise mittels Lateration, ähnlich wie in einem GPS-Positionsbestimmungs-System, wobei in diesem Fall die Entfernung zu Zugangspunkten des WLAN, im Folgenden auch als Access Point oder kurz AP bezeichnet, durch ein WLANfähiges Endgerät bestimmt wird. Dazu muss die Position der jeweiligen Access Points bekannt sein und es müssen von mindestens drei Access Points Signale durch das jeweilige Endgerät empfangbar sein, wenn eine dreidimensionale Position bestimmt werden soll. Auch bei WLAN-basierten Positionsbestimmungs-Systemen kann die Genauigkeit der Positionsbestimmung durch Ausnutzen einer Überbestimmung erhöht werden, wenn Signale von mehr als drei Access Points empfangen werden. Dieses Verfahren wird daher auch als Trilateration oder Multilateration bezeichnet.

Die Entfernung zu einem Access Point wird dabei durch das WLAN-fähige Endgerät typischerweise mittels der Signalstärke oder mittels Signallaufzeiten eines von dem Access Point empfangenen Signals abgeschätzt. Die empfangene Signalstärke wird auch als RSS (Received Signal Strength) bezeichnet und nimmt unter normalen Umständen mit zunehmender Entfernung zum Access Point ab. Die empfangene Signalstärke wird in der Regel als RSSI-Wert (Received Signal Strength Indicator) angegeben, wobei ein höherer Wert einer höheren empfangenen Signalstärke entspricht. Zum Bestimmen eines RSSI-Wertes werden durch das Endgerät typischerweise vom Access Point gesendete sogenannte Beacons ausgewertet, wobei die Sendeleistung eines Beacons empfangsseitig bekannt ist oder eine diesbezügliche Information im Beacon mitgesendet wird, so dass aus der empfangenen Signalstärke ein Maß für die Abschwächung des Signals ermittelt werden kann, welches wiederum ein Maß für die Entfernung darstellt. Die Auswertung von Beacons ermöglicht ein Bestimmen der empfangenen Signalstärke, ohne sich mit dem WLAN-Netzwerk zu verbinden. Typischerweise senden Access Points in zyklischen Zeitabständen Beacons mit der niedrigsten einstellbaren Sendeleistung, um sicherzustellen, dass bei Erhalt eines Beacons durch ein Endgerät mit diesem auch eine stabile Verbindung aufgebaut werden kann.

Die zur Positionsbestimmung des Endgerätes benötigten Positionsinformationen der Access Points können beispielsweise in einer Datenbank oder Nachschlagetabelle hinterlegt sein, auf welche das Endgerät zugreifen kann, oder direkt in einem Speicher des Endgerätes hinterlegt sein. Die als Access Points eingesetzten Geräte sind häufig nicht fest installiert, wodurch sich das Problem ergibt, dass bei Positionsänderungen eines oder mehrerer Access Points die hinterlegten Positionsinformationen nicht mehr die tatsächliche Position angeben, was wiederum zu einer fehlerhaften Positionsbestimmung durch das Endgerät führt. Aus WO 2014/180845 A1 ist ein Verfahren zur Verbesserung von Positionsinformationen bekannt, bei dem jedes einer Mehrzahl von Smartphones eine Positionsinformation, die die Positionskoordinaten, deren Genauigkeit, den Gültigkeitszeitpunkt und eine Identifikation des jeweiligen Smartphones enthält, zu einem Server sendet, wobei der Server eine Netzausgleichung ausführt. Das Ergebnis der Netzausgleichung sind wiederum Positionskoordinaten der Smartphones und die Genauigkeit dieser Positionskoordinaten. Sofern ein Vergleich ergibt, dass die mittels Netzausgleichung ermittelten Positionskoordinaten und deren Genauigkeit verbessert sind, werden diese Positionskoordinaten und deren Genauigkeit zum entsprechenden Smartphone übertragen und können dort übernommen werden.

Der Erfindung liegt die Aufgabe zugrunde, einen Weg aufzuzeigen, wie die Bestimmung der Position einer beweglichen Kommunikationseinrichtung unter Verwendung eines Positionsbestimmungssystems verbessert werden kann, insbesondere auch für eine Positionsbestimmung innerhalb von Gebäuden.

Ein Kerngedanke der Erfindung kann darin gesehen werden, Positionszusatzinformationen für ein beispielsweise auf GPS oder WLAN basierendes Positionsbestimmungs-System in Form von Integritätsinformationen und/oder Korrekturdaten bereitzustellen, wobei die Positionszusatzinformationen in Abhängigkeit von positionsbezogenen Informationen bestimmt werden, die von mobilen, also beweglichen Kommunikationseinrichtungen bereitgestellt werden, deren Position nicht vorab bekannt ist.

Ein weiterer Kerngedanke der Erfindung kann darin gesehen werden, die bereitgestellten Positionszusatzinformationen, die für einen Zeitpunkt taₙ gültig sind, zu einer mobilen, also beweglichen Kommunikationseinrichtung zu übertragen, wobei diese Positionszusatzinformationen für die bewegliche Kommunikationseinrichtung erst zu einem späteren Zeitpunkt tbₙ zur Verfügung stehen, und in der mobilen Kommunikationseinrichtung Positionsinformationen und/oder Bewegungsdaten und/oder Bewegungsmodelle für Bewegungsänderungen zumindest vom Zeitpunkt taₙ bis zum Zeitpunkt tbₙ bereitzustellen, die zu diesen Bereitstellungszeitpunkten auch gültig sind, so dass die mobile Kommunikationseinrichtung in der Lage ist, im Wesentlichen zum Zeitpunkt tbₙ ihre aktuelle Position in Abhängigkeit von der zum Zeitpunkt taₙ bereitgestellten Positionsinformationen, von der zum Zeitpunkt tbₙ empfangenen Positionszusatzinformationen und/oder, sofern sich die bewegliche Kommunikationseinrichtung zwischen den Zeitpunkten taₙ und tbₙ bewegt hat, von den zwischen den Zeitpunkten taₙ und tbₙ ermittelten bewegungsbezogenen Informationen und/oder Bewegungsmodellen für Bewegungsänderungen in Echtzeit verbessert zu bestimmen.

Es ist anzumerken, dass die beweglichen Kommunikationseinrichtungen, welche die zum Bestimmen der Positionszusatzinformationen verwendeten positionsbezogenen Informationen bereitstellen, und die beweglichen Kommunikationseinrichtungen, welche die Positionszusatzinformationen zur verbesserten Bestimmung Positionsbestimmung verwenden, identisch oder aber auch unterschiedliche Einrichtungen sein können, wobei erfindungsgemäß eine Ausgestaltung als unterschiedliche Einrichtungen vorgesehen ist.

Die Erfindung wird nachfolgend anhand einiger Ausführungsbeispiele in Verbindung mit den Zeichnungen näher erläutert. Es zeigen:
- Fig. 1: ein beispielhaftes Kommunikationssystem mit einer mobilen Kommunikationseinrichtung und einer Auswerteeinrichtung gemäß der Erfindung,
- Fig. 2: ein beispielhaftes zur Indoor-Positionsbestimmung eingesetztes WLAN-basierten Positionsbestimmungs-System,
- Fig. 3: beispielhaft eine bestimmte räumliche Anordnung beweglicher Kommunikationseinrichtungen und Access Points in einem WLAN-basierten Positionsbestimmungs-System,
- Fig. 4: eine grafische Darstellung zur Erläuterung der Auswirkung des Verfahrens zur Verbesserung der Bestimmung der aktuellen Position der in Fig. 1 gezeigten mobilen Kommunikationseinrichtung,
- Fig. 5: eine weitere grafische Darstellung zur Erläuterung der Auswirkung des Verfahrens zur Verbesserung der Bestimmung der aktuellen Position der in Fig. 1 gezeigten mobilen Kommunikationseinrichtung.

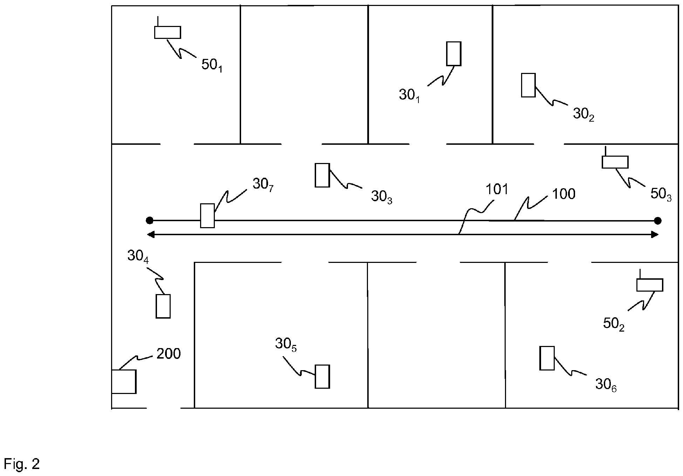

Fig. 2 bis Fig. 5 stellen der Einfachheit halber nur die X-Y-Horizontalebene eines 3-dimensionalen Raumes dar. Die Aufgabe einer allgemeinen 3-dimensionalen Positionsbestimmung kann allgemein bekannt auch beschrieben werden durch die Problemstellung in einem 2-dimensionalen X-Y-Koordinatensystems welches dann auf drei Dimensionen X-Y-Z übertragen werden kann.

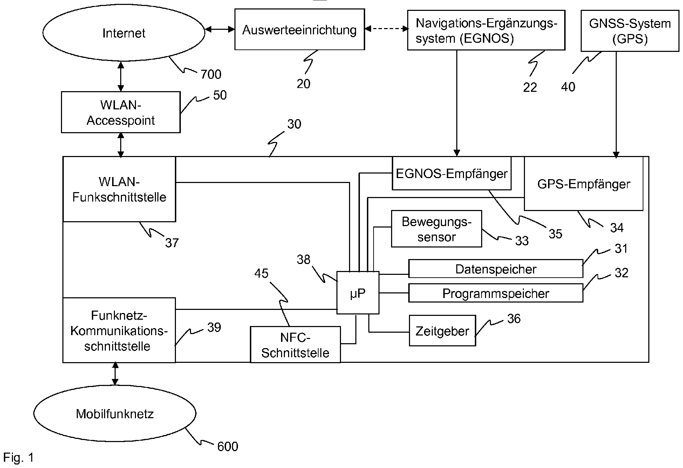

Fig. 1 zeigt eine bewegliche, d.h. mobile Kommunikationseinrichtung 30, bei der es sich beispielsweise um ein Smartphone, ein Notebook, eine in einem Fahrzeug installierte Kommunikationseinrichtung oder dergleichen handeln kann. Der einfacheren Darstellung halber ist nur eine mobile Kommunikationseinrichtung 30 dargestellt. Für das Ausführen eines erfindungsgemäßen Verfahrens werden jedoch eine Mehrzahl beweglicher Kommunikationseinrichtungen 30 eingesetzt.

Im dargestellten Beispiel weist die bewegliche Kommunikationseinrichtung 30 eine erste Empfangseinrichtung 34 auf, die dazu ausgebildet ist, Signale von einem Navigationssystem 40 zu empfangen, um ihre Position bzw. diese Position beschreibende Positionsinformationen ermitteln zu können. Handelt es sich bei dem Navigationssystem 40 beispielsweise um ein GPS-System, enthält die erste Empfangseinrichtung 34 einen GPS-Chip und eine Antenne. Die erste Empfangseinrichtung 34 fungiert somit als GPS-Empfänger. Ferner weist die bewegliche Kommunikationseinrichtung 30 im dargestellten Ausführungsbeispiel eine WLAN-Funkschnittstelle 37 zur drahtlosen Kommunikation mit Access Points 50 auf und ist zur WLAN-basierten Positionsbestimmung ausgebildet. Der einfacheren Darstellung halber ist nur ein Access Point 50 dargestellt, zur WLAN-basierten Positionsbestimmung befinden jedoch typischerweise eine Mehrzahl von Access Points 50, mindestens drei, in Kommunikationsreichweite der beweglichen Kommunikationseinrichtung 30, wobei diese Access Points 50 dem gleichen oder unterschiedlichen WLANS zugeordnet sein können.

Weiterhin weist die mobile Kommunikationseinrichtung 30 in der dargestellten Ausführungsform eine Empfangseinrichtung 35 auf, die dazu ausgebildet ist, die von einem Navigations-Ergänzungssystem 22 bereitgestellten und ausgesendeten Positionszusatzinformationen zu empfangen. Die Positionszusatzinformationen enthalten vorzugsweise zu einem bestimmten ersten Zeitpunkten taₙ zugeordnete Korrekturdaten und gegebenenfalls deren Genauigkeit sowie gegebenenfalls Integritätsinformationen, die zur verbesserten Positionsbestimmung verwendet werden können.

Handelt es sich bei dem Navigations-Ergänzungssystem 22 um ein EGNOS-System, so kann die Empfangseinrichtung 35 einen EGNOS-Chip und eine Antenne aufweisen. Der GPS-Chip und der EGNOS-Chip können auch als integrierter Gesamtchip vorliegen. Die EGNOS Daten können nicht nur per direktem Satellitensignal empfangen werden, sondern beispielsweise auch über das Internet 700 bezogen werden, auf welches die bewegliche Kommunikationseinrichtung 30 über ein WLAN mittels eines WLAN-Access Points 50 oder über ein Mobilfunknetz 600 zugreifen kann. Zur Anbindung an das Mobilfunknetz 600 weist die bewegliche Kommunikationseinrichtung 30 eine entsprechende Funknetz-Kommunikationsschnittstelle 39 auf.

Die Erfindung schlägt eine alternative Möglichkeit zur Bereitstellung von Positionszusatzinformationen vor. Zu diesem Zweck ist eine Auswerteeinrichtung 20 vorgesehen, die positionsbezogene Informationen von ersten beweglichen Kommunikationseinrichtungen 30 empfängt, wobei die positionsbezogenen Informationen einem ersten Zeitpunkt taₙ zugeordnet sind. In Abhängigkeit dieser positionsbezogenen Informationen bestimmt die Auswerteeinrichtung 20 mittels einer Ausgleichsrechnung eine dem ersten Zeitpunkt taₙ zugeordnete Positionszusatzinformation und stellt diese einer weiteren beweglichen, zu den ersten beweglichen Kommunikationseinrichtungen unterschiedlichen Kommunikationseinrichtung 30 zur Verfügung. In einer beispielhaften, nicht zur Erfindung gehörigen Ausgestaltung stellt die Auswerteeinrichtung 20 die dem ersten. Zeitpunkt taₙ zugeordnete Positionszusatzinformation alternativ einer der beweglichen Kommunikationseinrichtungen 30, von denen die Auswerteeinrichtung 20 positionsbezogene Informationen empfangen hat, zur Verfügung.

Die bewegliche Kommunikationseinrichtung 30, welche die Positionszusatzinformation von der Auswerteeinrichtung 20 empfängt, kann diese nutzen, um die Integrität einer für den ersten Zeitpunkt taₙ ermittelten Positionsinformation zu bestimmen, d.h. festzustellen, ob diese Positionsinformation fehlerhaft ist. Alternativ oder zusätzlich kann sie eine Neubestimmung einer Positionsinformation für den ersten Zeitpunkt taₙ vornehmen unter Berücksichtigung von Korrekturdaten in der empfangenen Positionszusatzinformation, um so eine Positionsinformation für den ersten Zeitpunkt taₙ zu erhalten, welcher ein höhere Genauigkeit als die zunächst ermittelte Positionsinformation aufweist.

Die positionsbezogenen Informationen, die von einer beweglichen Kommunikationseinrichtung 30 ermittelt und zu der Auswerteeinrichtung 20 übertragen werden, können zur Positionsbestimmung geeignete Rohdaten umfassen, wie zum Beispiel die zur Positionsbestimmung mittels GPS geeigneten von GPS-Satelliten zum ersten Zeitpunkt taₙ empfangenen Informationen, oder zur WLAN-basierten Positionsbestimmung geeignete, von WLAN-Zugangspunkten zum ersten Zeitpunkt taₙ empfangene Signale, insbesondere die jeweilige empfangene Signalstärke und eine Identifikation in Reichweite befindlicher Access Points.

Ferner können die positionsbezogenen Informationen eine durch die bewegliche Kommunikationseinrichtung 30 aus diesen Rohdaten bestimmte Positionsinformation sowie gegebenenfalls eine zugeordnete Genauigkeit umfassen.

Besonders vorteilhaft können die positionsbezogenen Informationen ferner Informationen zu der Entfernung der beweglichen Kommunikationseinrichtung 30 zu wenigstens einer weiteren beweglichen Kommunikationseinrichtung 30 bzw. zum Ermitteln dieser Entfernung geeignete Informationen umfassen. Die Entfernung zu einer weiteren beweglichen Kommunikationseinrichtung 30 kann beispielsweise auch in Abhängigkeit einer empfangenen Signalstärke erfolgen, wobei zu diesem Zweck die zwei beteiligten beweglichen Kommunikationseinrichtungen direkt miteinander kommunizieren können. Denkbar ist auch, dass eine bewegliche Kommunikationseinrichtung 30 zyklisch Signale aussendet, die von anderen in Reichweite befindlichen beweglichen Kommunikationseinrichtungen 30 überwacht und zur Entfernungsbestimmung verwendet werden, wobei dies von der WLAN-Funkschnittstelle empfangbare Signale, oder aber auch Signale anderer Art, wie zum Beispiel Bluetooth- oder Infrarotsignale, sein können. Weiterhin ist denkbar, dass die beweglichen Kommunikationseinrichtungen 30 die Kommunikation anderer beweglicher Kommunikationseinrichtungen 30 mit Access Points 50 mithören und eine Entfernung in Abhängigkeit der empfangenen Signalstärke von der jeweiligen beweglichen Kommunikationseinrichtung 30 ausgesandten Signale ermitteln.

Eine bewegliche Kommunikationseinrichtung 30 kann auch vorteilhaft dazu ausgebildet sein, Signale von einer ortsfesten kurzreichweitigen Sendeeinrichtung zu empfangen, wie zum Beispiel einer Einrichtung mit RFID-Chip, welche zur Nahfeld-Kommunikation (NFC) ausgebildet ist. Zu diesem Zweck umfasst die in Fig. 1 dargestellte Ausführungsform einer beweglichen Kommunikationseinrichtung 30 eine NFC-Schnittstelle 45. Die Position des RFID-Chips wird vorab mit hoher Genauigkeit ermittelt und vorzugsweise wird diese Positionsinformation im RFID-Chip gespeichert und in den von diesem gesendeten Signalen übertragen. Die positionsbezogenen Informationen umfassen besonders vorteilhaft die dem RFID-Chip zugeordnete Positionsinformation, sofern sich die bewegliche Kommunikationseinrichtung 30 zum ersten Zeitpunkt taₙ in Reichweite des RFID-Chips befindet.

Weiterhin weist die mobile Kommunikationseinrichtung 30 eine Bewegungserfassungseinrichtung 33 zum Erfassen einer Bewegung der beweglichen Kommunikationseinrichtung 30 auf, wobei die Bewegung wenigstens abschnittsweise zwischen einem ersten Zeitpunkt taₙ und einem zweiten, späteren Zeitpunkt tbₙ erfasst wird. Hierzu kann die Erfassungseinrichtung 33 bewegungsbezogene Informationen, welche Bewegungsdaten enthalten, erzeugen, mit denen beispielsweise ein dreidimensionaler Vektor berechnet werden kann, der die Positionsänderung der beweglichen Kommunikationseinrichtung 30 in x-, y- und/oder z-Richtung von einem ersten Zeitpunkt taₙ zu einem zweiten Zeitpunkt tbₙ wiedergibt. Die Erfassungseinrichtung 33 kann beispielsweise einen einzelnen Bewegungssensor, zum Beispiel einen Beschleunigungssensor, oder dergleichen aufweisen. Die Bewegungserfassungseinrichtung 33 kann auch mehrere Sensoren aufweisen, um die Bewegungen und/oder Bewegungsinformationen der mobilen Kommunikationseinrichtung 30 präziser erfassen und hieraus die Positionsänderung berechnen zu können. Außerdem kann die Erfassungseinrichtung 33 dazu ausgebildet sein, Weiterverarbeitungsschritte basierend auf Bewegungsmodellen und/oder Modellen für Bewegungsänderungen zwischen zwei Zeitpunkten taₙ und tbₙ durchzuführen, um Lücken bei der Erfassung von bewegungsbezogenen Informationen geeignet zu überbrücken. Diese Weiterverarbeitungsschritte können aber auch in einer Steuereinheit 38 durchgeführt werden, wobei die entsprechenden Anweisungen beispielsweise in einem Programmspeicher 32 gespeichert sind und aus diesem geladen werden können. Als bewegungsbezogene Informationen können zusätzlich weitere Informationen wie zum Beispiel Positionsinformationen, die nur vom GPS-Empfängers 34 bereitgestellt werden oder WLAN-basiert ermittelt wurden, berücksichtigt werden, die in einem Bearbeitungsintervall von taₙ bis tbₙ gültig sind.

Die Bewegungserfassungseinrichtung 33 kann besonders vorteilhaft dazu eingesetzt werden, die hochgenaue Positionsinformation einer NFC-Einrichtung mit RFID-Chip auch bei Entfernen von der NFC-Einrichtung noch für eine gewisse Zeit, typischerweise mindestens mehrere Sekunden, zur ebenfalls hochgenauen Bestimmung von Nachfolgepositionen außerhalb der Reichweite der NFC-Einrichtung zu nutzen, wobei diese wiederum in den zur Auswerteeinrichtung 20 übertragenen positionsbezogenen Informationen enthalten sein können.

Die Auswerteeinrichtung 20, welche im Prinzip die Aufgabe eines Positions-Ergänzungssystems hat, kann beispielsweise als Internet-Server ausgebildet sein, welcher mit dem Internet verbunden ist, wobei die positionsbezogenen Informationen, wie beispielhaft in Fig. 1 dargestellt, von der jeweiligen mobilen Kommunikationseinrichtung 30 zu der Auswerteeinrichtung 20 über das Internet übertragen werden können. Die positionsbezogenen Informationen können aber auch beispielsweise über das Mobilfunknetz 600 oder jede andere geeignete Kommunikationsverbindung zu der Auswerteeinrichtung 20 übertragen werden. Auch kann die Auswerteeinrichtung 20 beispielsweise lokal in einem WLAN angeordnet sein, so dass eine Kommunikation über das Internet nicht erforderlich ist.

Eine mit einer Bewegungserfassungseinrichtung 33 ausgerüstete mobile Kommunikationseinrichtung 30 kann zudem in die Lage versetzt werden, ihre aktuelle Position in Echtzeit für einen Gültigkeitszeitpunkt tbₙ mit verbesserter Genauigkeit zu bestimmen.

Die in der mobilen Kommunikationseinrichtung 30 implementierte Steuereinrichtung 38 ist beispielsweise als Mikroprozessor ausgebildet. Die Steuereinrichtung 38 kann vorzugsweise dazu ausgebildet sein, in Echtzeit, also im Wesentlichen zu einem zweiten Zeitpunkt tbₙ, eine verbesserte aktuelle Positionsinformation, welche für den zweiten Zeitpunkt tbₙ gültig ist, zu ermitteln. Hierzu wird unter Steuerung der Steuereinrichtung 38 eine für den ersten Zeitpunkt taₙ gültige Positionsinformation in Abhängigkeit von der dem ersten Zeitpunkt taₙ zugeordneten Positionsinformation, welche vom GPS-Empfänger bereitgestellt wird oder WLAN-basiert ermittelt wird, und der dem ersten Zeitpunkt taₙ zugeordneten Positionszusatzinformation, welche von der Auswerteeinrichtung 20 zur Verfügung gestellt worden ist, neubestimmt bzw. korrigiert. Die Steuereinrichtung 38 ist ferner dazu ausgebildet, in Echtzeit nunmehr in Abhängigkeit von der für den Zeitpunkt taₙ gültigen, korrigierten Positionsinformation und von den vom Bewegungssensor 33 zwischen den Zeitpunkten taₙ und tbₙ bereitgestellten bewegungsbezogenen Informationen eine für den Zeitpunkt tbₙ gültige, verbesserte aktuelle Positionsinformation in Echtzeit zu ermitteln. Die bewegungsbezogenen Informationen sind für den Zeitraum taₙ bis tbₙ gültig. Die bewegungsbezogenen Informationen können zusätzlich oder alternative Positionsinformationen, welche zwischen den Zeitpunkten taₙ und tbₙ vom GPS-Empfänger 34 bereitgestellt oder WLAN-basiert ermittelt werden, und/oder Bewegungsinformationen enthalten, welche aus Bewegungsmodellen für Bewegungen und/oder aus Bewegungsmodellen für Bewegungsänderung gewonnen werden, und/oder aus einem Sensor, zum Beispiel vom Bewegungssensor 33, zur Messung von Bewegung gewonnen werden.

In dem Programmspeicher 32 können u. a. Anweisungen für die Steuereinrichtung 38 gespeichert werden, um den Betrieb und alle Funktionen der beweglichen Kommunikationseinrichtung 30, welches beispielsweise ein Smartphone ist, steuern und überwachen zu können.

Weiterhin kann ein Datenspeicher 31 vorgesehen sein, in dem die vom GPS-Chip 34 oder WLAN-basiert ermittelten Positionsinformationen, das sind Positionskoordinaten und gegebenenfalls deren Genauigkeit, die empfangenen Positionszusatzinformationen und die vom Bewegungssensor 33 gelieferten Bewegungsdaten bzw. bewegungsbezogenen Informationen, die Ergebnisse bisheriger Berechnungen sowie die dazugehörenden Bestimmungszeitpunkte, auch für die Vergangenheit, gespeichert werden. Weiterhin können alle von der mobilen Kommunikationseinrichtung 30 beziehungsweise dem Mikroprozessor 38 aktuell in Echtzeit bestimmten Positionsinformationen und die dazugehörenden Beobachtungszeitpunkte, insbesondere bewegungsbezogene Informationen im Datenspeicher 31 abgelegt werden. Um den bewegungsbezogenen Informationen und den Positionsinformationen einen Bestimmungs- beziehungsweise Beobachtungszeitpunkt zuordnen zu können, kann ein Zeitgeber 36 in der mobilen Kommunikationseinrichtung 30 implementiert sein. Vorteilhaft kann der Zeitgeber 36 mit dem GPS-System 40 synchronisiert werden.

In der dargestellten Ausführungsform ist die Steuereinrichtung 38 mit dem Zeitgeber 36, dem Programmspeicher 32, dem Datenspeicher 31, dem Bewegungssensor 33, der WLAN-Funkschnittstelle 37, der Funknetz-Kommunikationsschnittstelle 39, der NFC-Schnittstelle 45, dem GPS-Empfänger 34 und dem EGNOS-Empfänger 35 verbunden, um alle Funktionen gemäß der Erfindung ausführen zu können.

Es kann vorgesehen sein, dass die Auswerteeinrichtung 20 eine Kommunikationsverbindung mit dem EGNOS-System 22 aufweist, um die durch die Auswerteeinrichtung 20 auf alternative Weise ermittelten Positionszusatzinformationen mit den durch das EGNOS-System ermittelten zu vergleichen und auf diese Weise gegebenenfalls nochmals verbesserte Positionszusatzinformationen zu erhalten. Dies ist jedoch nur vorteilhaft bei Einsatz eines GNSS-Systems zur Positionsbestimmung. In einem WLAN-basierten Positionsbestimmungssystem bietet die Auswerteeinrichtung 20 besonders vorteilhaft erstmalig die Möglichkeit zur Bereitstellung von Positionszusatzinformationen.

Bereits an dieser Stelle sei angemerkt, dass die im Datenspeicher 31 abgelegten Daten in einer besonderen Weise strukturiert gespeichert sein können. So können Bewegungsdaten, Positionszusatzdaten und Positionsinformationen, die einem bestimmten Bearbeitungsintervall zugeordnet sind, zusammengehörend abgelegt und/oder so abgelegt werden, dass auf ein beliebiges Bearbeitungsintervall schnell zugegriffen werden kann. Ein n-tes Bearbeitungsintervall wird durch einen ersten Zeitpunkt taₙ und einen zweiten, späteren Zeitpunkt tbₙ festgelegt. Ein erster Zeitpunkt taₙ legt zweckmäßigerweise den Zeitpunkt fest, für den eine für taₙ gültige Positionszusatzinformation von der Auswerteeinrichtung 20 bereitgestellt, zur mobilen Kommunikationseinrichtung 30 übertragen und der beweglichen Kommunikationseinrichtung 30 zum Zeitpunkt tbₙ zur Verfügung steht. Außerdem können Positionsinformationen vom GPS-Empfänger 34 oder WLAN-basiert bereitgestellt werden, die zu einem ersten Zeitpunkt taₙ gültig sind und zum gleichen Zeitpunkt taₙ in der Kommunikationseinrichtung 30 bereitgestellt werden. Ein zweiter, späterer Zeitpunkt tbₙ legt im Wesentlichen den Zeitpunkt fest, zu dem die aktuelle Position der mobilen Kommunikationseinrichtung 30 in Echtzeit berechnet werden soll. Ferner legen die jeweiligen Zeitpunktpaare taₙ und tbₙ ein n-tes Bearbeitungsintervall fest, in welchem bewegungsbezogene Informationen erfasst werden. Die Zeitdifferenz zwischen jedem Zeitpunktpaar taₙ und tbₙ entspricht im Wesentlichen dem Zeitversatz der Aktualität der Positionszusatzinformationen der Auswerteeinrichtung 20, zu dem diese in der mobilen Kommunikationseinrichtung 30 genutzt werden können. Bei der Auswerteeinrichtung 20 kann der Zeitunterschied (tbₙ-taₙ) beispielsweise einige Sekunden betragen.

In Fig. 2 ist ein beispielhaftes WLAN-basiertes Positionsbestimmungs-System 11 dargestellt, welches der Positionsbestimmung mobiler Kommunikationseinrichtungen 30₁ bis 30₇ innerhalb eines Gebäudes dient. Zu diesem Zweck sind im dargestellten Ausführungsbeispiel drei Access Points 50₁, 50₂ und 50₃ an verschiedenen Positionen angeordnet, wobei diese Positionen einmalig mit hoher Genauigkeit ermittelt werden und in einer Nachschlagetabelle mit einer zugeordneten Identifikationsinformation des jeweiligen Access Points hinterlegt werden. Vorteilhaft und zum Erzielen einer höheren Genauigkeit kann auch eine größere Anzahl von Access Points vorgesehen sein. Auf diese Nachschlagetabelle, die in einer Datenbank hinterlegt sein kann, haben die Kommunikationseinrichtungen 30₁ bis 30₇ Zugriff. Zu diesem Zweck kann jede der Kommunikationseinrichtungen 30₁ bis 30₇ über einen der Access Points eine Verbindung zum Internet aufbauen. Zur Positionsbestimmung empfängt jede der mobilen Kommunikationseinrichtungen 30₁ bis 30₇ zyklische Beacon-Signale von allen Access Points in Reichweite und ermittelt eine Positionsinformation in Abhängigkeit der empfangenen Signalstärken, welche ein Maß für die Entfernung zum jeweiligen Access Point sind, sowie die zugehörige Genauigkeit. Ferner bestimmen die mobilen Kommunikationseinrichtungen 30₁ bis 30₇ jeweils paarweise die Entfernung zueinander. Diese positionsbezogenen Informationen sendet jede der Kommunikationseinrichtungen 30₁ bis 30₇ an eine in Fig. 2 nicht dargestellte Auswerteeinrichtung 20, welche aus diesen positionsbezogenen Informationen unter Ausnutzung der Überbestimmung Positionszusatzinformationen. Insbesondere deckt die Auswerteeinrichtung 20 auf, falls die tatsächliche Position eines Access Points nicht mit der für diesen Access Point hinterlegten Position übereinstimmt, da dessen Position beispielsweise durch eine Reinigungskraft signifikant verändert wurde. Diese Positionszusatzinformationen stellt die Auswerteeinrichtung 20 wiederum den mobilen Kommunikationseinrichtungen 30₁ bis 30₇ zur Verfügung und versetzt diese in die Lage, eine Neubestimmung der Position mit höherer Genauigkeit für den Zeitpunkt durchzuführen, zu dem die positionsbezogenen Informationen gewonnen wurden.

Wie in Fig. 2 dargestellt, kann auch eine ortsfest installierte NFC-Einrichtung 200 mit integriertem RFID-Chip vorgesehen sein, die an eine in Reichweite befindliche mobile Kommunikationseinrichtung eine hochgenaue Positionsinformation übermitteln kann, welche diese dann als positionsbezogenen Information an die Auswerteeinrichtung 20 weiterleiten kann. Mittels einer Bewegungserfassungseinrichtung 33 kann beispielsweise die mobile Kommunikationseinrichtung 30₄ diese hochgenaue Positionsinformation der NFC-Einrichtung 200 auch noch zur genaueren Positionsbestimmung nutzen, nachdem sie die Reichweite der NFC-Einrichtung 200 wieder verlassen hat.

Ferner kann eine mobile Kommunikationseinrichtung 30₇ eingesetzt werden, deren Freiheitsgrade der Bewegung auf vorbestimmte Weise eingeschränkt sind, wobei dies bei der Ausgleichungsrechnung, welche die Auswerteeinrichtung 20 durchführt als Parametrierung eingeht, wobei durch die Randparameter die Genauigkeit gesteigert werden kann. Im dargestellten Ausführungsbeispiel wird die mobile Kommunikationseinrichtung 30₇ automatisch auf einer Schiene 100 hin und her geführt, angedeutet durch den Pfeil 101. Der Bewegungsablauf ist dabei vorgegeben und der Auswerteeinrichtung 20 bekannt. Denkbar wäre auch, an den Endpunkten der Schiene 100 jeweils NFC-Einrichtungen wie die Einrichtung 200 vorzusehen.

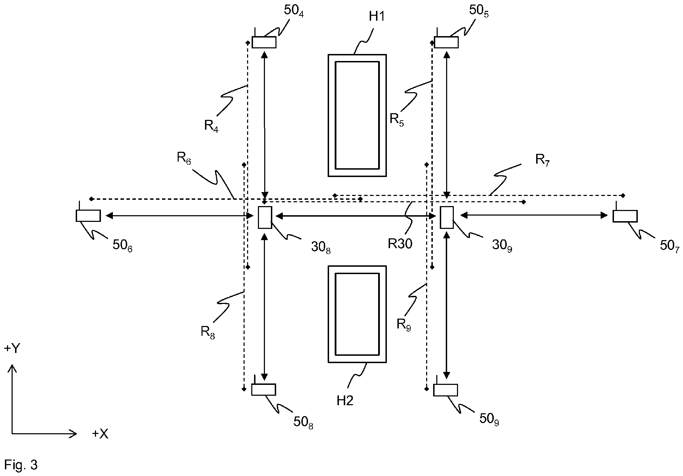

Fig. 3 zeigt beispielhaft ein WLAN-basiertes Positionsbestimmungs-System 12, in welchem sechs Access Points 50₄ bis 50₉ vorgesehen sind. Angenommen sei, dass die mobilen Kommunikationseinrichtungen 30₈ und 30₉ eine Positionsbestimmung nur WLAN-basiert in Abhängigkeit von mittels RSS durchgeführten Streckenmessungen zu den Access Points 50₄ bis 50₉ durchführen, wobei die jeweilige Positionsbestimmung der Kommunikationseinrichtungen 30₈ bzw. 30₉ in X-Richtung alleine durch die RSS basierten Streckenmessungen zu den jeweils erreichbaren Access Points entweder keine Überbestimmung aufweist oder nur eine so schlechte Kontrolle bietet, dass falsche Messungen in X-Richtung und insbesondere falsch hinterlegte Koordinaten der Access Points in X-Richtung in der Ausgleichungsrechnung durch die Auswerteeinrichtung 20 nicht aufgedeckt werden können.

Die Hindernisse H1 und H2 lassen eine RSS basierte Streckenbestimmung durch die Hindernisse aufgrund der Dämpfungseigenschaften nicht zu. Zu jedem der Access Points ist eine zugeordnete Distanz Ri dargestellt, welche die maximale Reichweite des jeweiligen Access Points, bis zu der von dem jeweiligen Access Point ausgesendete Signale zur Streckenbestimmung mittels RSS eingesetzt werden, andeuten soll. Eine eingezeichnete Rᵢ Distanz gibt beispielsweise die in einer Auswertelogik des jeweiligen Empfangsgerätes vorgegebene maximale Reichweite an, bis zu der ein aus einem von einem Access Point 50ᵢ empfangenen Signal ermittelter RSSI-Wert noch zu Streckenbestimmungen genutzt wird. Mit anderen Worten wird eine aus einem RSSI-Wert ermittelte Entfernung, welche größer als die jeweilige Distanz Rᵢ ist, aufgrund einer zu hohen Ungenauigkeit nicht zur Streckenbestimmung genutzt. In dem in Fig. 3 dargestellten Beispiel gilt R₆=R₇ > R₄=R₅=R₈=R₉, also eine identische maximale Distanz für die Access Points 50₆ und 50₇, welche größer ist als die der anderen Access Points. Ein identischer Rᵢ Wert liefert jeweils die gleiche Streckenbestimmungsgenauigkeit bei gleichem Abstand zum jeweiligen Access Point. Ein größerer Rᵢ Wert liefert bei gleichem Abstand eine bessere Streckenbestimmungsgenauigkeit. Durch die Hindernisse und die gegebenen Rᵢ Werte sind einige Streckenbestimmungen nicht möglich. Aufgrund der Länge von R₆ kann z. B. die mobile Kommunikationseinrichtung 30₉ keine Streckenbestimmung zum Access Point 50₆ durchführen. Im vorliegenden Beispiel ist somit eine RSS basierte Streckenbestimmung von einer mobilen Kommunikationseinrichtung zu einem Access Point in X-Richtung genauer als in Y-Richtung. Die in Fig. 3 dargestellte Distanz R30, für die im dargestellten Beispiel R30=0,9*R₆ gilt, gibt in analoger Weise die maximale Reichweite für eine RSS basierte Streckenbestimmung zwischen den zwei mobilen Kommunikationseinrichtungen 30₈ und 30₉ an. Diese Betrachtungen setzen schon voraus, dass angenommen wird, dass die Z-Koordinaten aller Access Points sowie aller mobilen Kommunikationseinrichtungen einen ausreichend ähnlichen Wert in Relation zu dem jeweiligen Punktabstand haben. Außerdem wird davon ausgegangen, dass keine anderen dämpfenden Hindernisse als H1 und H2 vorliegen.

Ohne eine RSS basierte Streckenmessung zwischen den zwei mobilen Kommunikationseinrichtungen erfolgt die Positionsbestimmung einer mobilen Kommunikationseinrichtung somit aufgrund von jeweils drei Streckenmessungen. Im dreidimensionalen Fall eines X-Y-Z Koordinatensystems liegt somit bei zu bestimmenden drei Positionskoordinaten eines Punktes keine Überbestimmung vor und somit sind weder Fehler in den Positionskoordinaten der beteiligten Access Point noch Fehler in den drei Streckenmessungen aufdeckbar. Außerdem können Ungenauigkeitsmasse der Positionsbestimmungen der mobilen Kommunikationseinrichtungen nur aufgrund von a priori bekannten Fehlerwerten der Berechnungsgrößen, der Strecken und Positionen der Access Points, bestimmt werden, wenn diese a priori Fehlerwerte vorliegen. Aber selbst wenn alle diese a priori Fehlerwerte vorliegen, können diese Fehlerwerte selbst aufgrund der fehlenden Überbestimmung nicht kontrolliert werden. Damit sind aber auch die aus diesen durch Fehlerfortpflanzungsmethoden abgeleiteten Fehler der Positionskoordinaten der mobilen Kommunikationseinrichtungen nicht kontrollierbar. Jeder Fehler in einer Annahme, sei es ein Absolutwert einer Eingabegröße oder deren a priori Fehlerwert, ist somit nicht aufdeckbar.

Im Weiteren wird davon ausgegangen, dass alle Z-Koordinaten bekannter Weise per Definition identisch sind und wir somit nur den zweidimensionalen Fall der X-Y Ebene betrachten müssen. In diesem Fall der nur zwei unbekannten Positionskoordinaten einer mobilen Kommunikationseinrichtung liegt bei drei RSS basierten Streckenmessungen zu einer mobilen Kommunikationseinrichtung anscheinend eine Überbestimmung von eins (1=3-2) vor. Dieses gilt aber nur, wenn nie zwei Strecken in der gleichen Richtung gemessen werden. Wenn, wie in dem in Fig. 3 dargestellten Beispiel, die zwei Streckenmessungen in Y-Richtung in absolut identischer Richtung liegen und die dritte Strecke dazu exakt vertikal verläuft, dann hat zwar die Y-Koordinate eine Überstimmung von eins aber die X-Koordinate wird ohne Überbestimmung bestimmt, wodurch Fehler in der X-Koordinate weder für die mobile Kommunikationseinrichtung noch den Access Point der Strecke in X-Richtung und auch nicht gleichartige Fehler in den X-Koordinaten der zwei Access Points der zwei Streckenmessungen in Y-Richtung oder ihre abgeleiteten Fehlermaße aufdeckbar sind. In einem solchen geometrischen Fall liefern die Streckenmessungen somit keine Informationen zu den von einer Auswerteeinrichtung zu ermittelnden und einem Navigations-Ergänzungssystem bereitzustellenden Integritätsinformationen und/oder Korrekturdaten, zum Beispiel für die Koordinaten der Access Points. Sind in dem Fall der Fig. 3 mindestens zwei der drei Streckenmessungen in nahezu gleicher Richtung, aber nicht identischer Richtung, so sind zwar alle zwei Koordinaten einer mobilen Kommunikationseinrichtung überbestimmt berechenbar und somit algebraisch kontrolliert, aber doch nur sehr schwach kontrolliert, wodurch selbst grobe Fehler nicht signifikant aufdeckbar sind und die drei Streckenmessungen somit keinen signifikanten Betrag zur Bestimmung von Positionszusatzinformationen, d.h. Integritätsinformationen und/oder Korrekturdaten, liefern können.

Betrachtet man Fig. 3 ohne die RSS Messung zwischen den mobilen Kommunikationseinrichtungen 30₈ und 30₉, so zerfällt das Problem der Positionsbestimmungen für die mobilen Kommunikationseinrichtungen 30₈ und 30₉ in 2 unabhängige Problemstellungen und als Beispiel für das linke Teilsystem können die Messungen bezüglich der 30₈ nur die Korrekturwerte der Koordinaten der Access Points 50₄, 50₆ und 50₈ kontrollieren oder verbessern. Außerdem haben die Positionsbestimmungen der mobilen Kommunikationseinrichtungen 30₈ und 30₉ auf die jeweils andere Einrichtung keinen Einfluss.

Betrachtet man Fig. 3 aber mit der RSS Messung zwischen den mobilen Kommunikationseinrichtungen 30₈ und 30₉, so hat man zwei sich gegenseitig beinflussende Probleme der Positionsbestimmungen für die mobilen Kommunikationseinrichtungen 30₈ und 30₉ , da beide Teilsysteme nun geometrisch und Ausgleichungstechnisch verknüpft sind. Damit haben alle RSS Messungen zu Positionsbestimmungen der mobilen Kommunikationseinrichtungen 30₈ und 30₉ auf die jeweils andere Einrichtung einen Einfluss. Es wird ersichtlich, dass auch die RSS Messungen zwischen zwei mobilen Kommunikationseinrichtungen, deren Positionen vorab nicht hochgenau bekannt sein müssen, einen Beitrag zur Berechnung von Korrekturgrößen für Navigations-Ergänzungssysteme liefern können. Je präziser die Messungen zwischen den mobilen Kommunikationseinrichtungen sind und je mehr von diesen Messungen und mobilen Kommunikationseinrichtungen zu gleicher Zeit oder über einen Zeitraum vorliegen, umso hochwertiger wird der Beitrag sein. Diese Bestimmungsbeträge liefern durch die Berechnungen eines Auswertesystems aufdatierte verbesserte Korrekturwerte für den Folgezeitpunkt sowie die Aufdatierung entsprechender Positionszusatzinformationen, d.h. Integritätsinformationen und/oder Korrekturdaten.

Nur durch die Positionsbestimmung der dargestellten mobilen Kommunikationseinrichtungen 30₈ und 30₉ aus den RSS Messungen zu den jeweils drei erreichbaren Access Points können zum Beispiel Fehler in den Messungen der Entfernung zwischen der mobilen Kommunikationseinrichtung 30₈ und dem AP 50₆ und zwischen der mobilen Kommunikationseinrichtung 30₉ und dem AP 50₇ oder Fehler in den X-Koordinaten der APs 50₆ und 50₇ nicht ausreichend gut aufgedeckt werden und somit keine Positionszusatzinformationen wie ein Überschreitungslimit oder explizite Korrekturwerte für diese X-Koordinaten berechnet und den mobilen Kommunikationseinrichtungen übermittelt werden, da die vorliegende Geometrie dieses nicht ermöglicht, da alle anderen Messungen hierzu vertikal also in Y-Richtung verlaufen und die Kontrolle in X-Richtung sehr gering ist.

Die Korrekturwerte in den Positionszusatzinformationen sind somit die Korrekturen der a priori zum Beispiel aus einer Datenbank bekannten X-Koordinaten der APs 50₆ und 50₇. Die Genauigkeiten der Korrekturwerte aus ihrer letzten Bestimmung können ebenfalls in der Datenbank hinterlegt sein und können im Verfahren der Netzausgleichung ebenfalls berechnet und in der Datenbank aufdatiert werden.

Zur Lösung dieses Problems der schlecht kontrollierten X-Werte ist besonders vorteilhaft vorgesehen, dass die mobile Kommunikationseinrichtung 30₈ zusätzlich eine Streckenmessung zu der mobilen Kommunikationseinrichtung 30₉, also eine koordinatensystemunabhängige, relative Messung zwischen zwei beweglichen Kommunikationseinrichtungen während deren unterschiedlicher Bewegungen durchführt, da die Richtung dieser Streckenmessung in X-Richtung liegt und somit X-Koordinaten kontrolliert.

Im dargestellten Beispiel liegt diese Strecke zwischen den mobilen Kommunikationseinrichtungen 30₈ und 30₉ exakt in X-Richtung und kontrolliert damit die X-Koordinaten der mobilen Kommunikationseinrichtungen 30₈ und 30₉ und somit auch der Access Points 50₆ und 50₇, so dass bei der Netzausgleichung auch die Positionszusatzinformationen für diese X-Koordinaten bestimmt werden können. Auch hier müssen die Positionen der mobilen Kommunikationseinrichtungen vorab nicht exakt bekannt sein.

Es sei noch angemerkt, dass bei dem in Fig. 3 dargestellten Beispiel die Abstandsmessung zwischen den mobilen Kommunikationseinrichtungen 30₈ und 30₉ die Abstandsmessungen zwischen der mobilen Kommunikationseinrichtung 30₈ und dem AP 50₆ und zwischen der mobilen Kommunikationseinrichtung 30₉ und dem AP 50₇ und die X-Koordinaten der APs 50₆ und 50₇ kontrolliert, so dass damit ein Genauigkeitssprung in der Bestimmung der Positionszusatzinformationen erzielt wird, bzw. eigentlich erst sinnvoll wird, da ohne die Abstandsmessung zwischen den mobilen Kommunikationseinrichtungen 30₈ und 30₉ im dargestellten Szenario keine ausreichend hohen Genauigkeiten möglich sind. Ohne die Abstandsmessung zwischen den mobilen Kommunikationseinrichtungen 30₈ und 30₉ können im vorliegenden Fall zwar Positionszusatzinformationen selbst in X-Richtung für die APs 50₆ und 50₇, d.h. Korrekturwerte für deren X-Koordinaten, bestimmt werden, aber nicht ausreichend genau. Es sei auch gesagt, dass die Abstandsmessung zwischen den mobilen Kommunikationseinrichtungen 30₈ und 30₉ auch die Y-Koordinaten aller Access Points verbessert und somit auch deren Korrekturwerte im Auswertesystem 20 verbessert werden können.

Das dargestellte Beispiel ist ein Extremfall, bei welchem einige Positionszusatzinformationen nur durch Messungen zwischen den mobilen Kommunikationseinrichtungen zueinander bestimmt werden können. Ein solcher Extremfall wird in einem realen System in der Regel eher selten eintreten. Durch dieses Beispiel wird aber klar, dass durch Abstandsmessungen zwischen mobilen Kommunikationseinrichtungen und Bereitstellen entsprechender positionsbezogener Informationen der Auswerteeinrichtung 20 die Bestimmung von Positionszusatzinformationen in besonderem Maße unterstützt und verbessert wird, auch wenn sie ohne diese Abstandsmessungen zwischen mobilen Kommunikationseinrichtungen schon bestimmt sind und obwohl vorab keine hochgenauen Positionen der mobilen Kommunikationseinrichtungen bekannt sein müssen.

Die Funktionsweise des in Fig. 1 gezeigten Positionsbestimmungssystems 10 wird nachfolgend im Hinblick auf die Bestimmung einer aktuellen Position in Echtzeit für einen Gültigkeitszeitpunkt tbₙ mit verbesserter Genauigkeit näher erläutert.

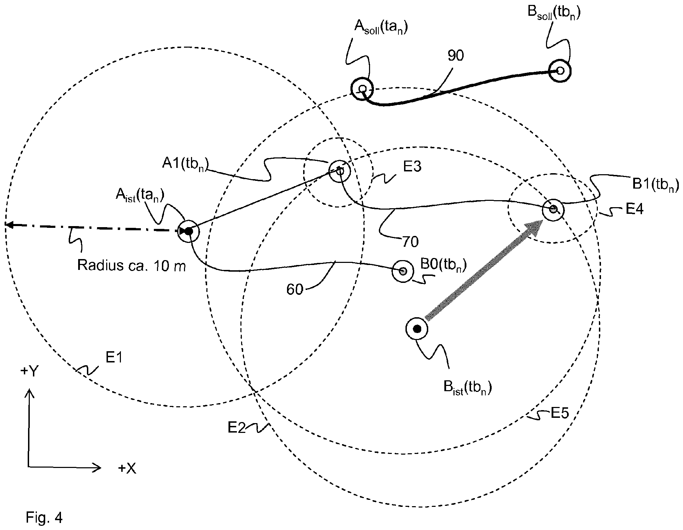

Zunächst werden einige Szenarien anhand der Fig. 4 geschildert.

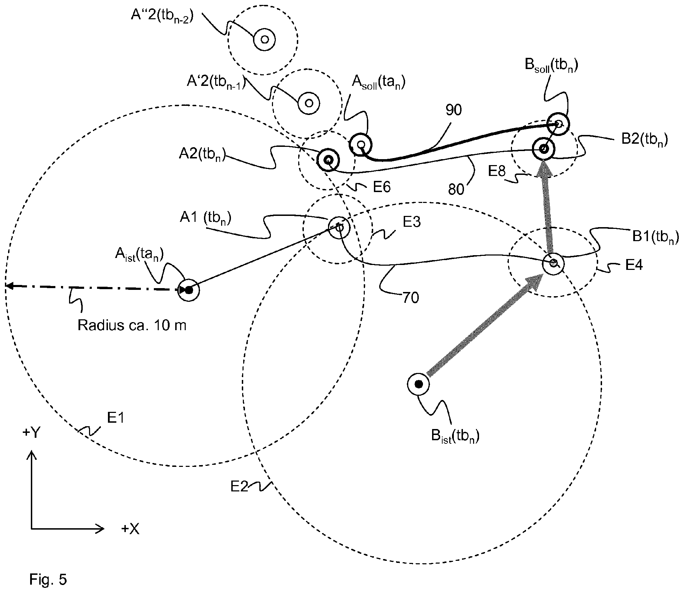

Angemerkt sei, dass für die Fig. 4 und die Fig. 5 die nachfolgend beispielhaft angeführte Legende für die Zuordnung von Positionsinformationen zu Zeitpunkten gilt:
Legende:
[berechnete Lage von A gültig zum Zeitpunkt taₙ] [Verfahren oder Sollwert](Berechnungszeitpunkt)
z. B. [A] [1] (tbₙ) =: A1(tbₙ) oder
z. B. [A] [ᵢₛₜ] (tbₙ) =: Aᵢₛₜ(tbₙ) oder
z. B. [A][ₛₒₗₗ] (taₙ) =: Aₛₒₗₗ(taₙ)

Zeitgleich zur Berechnung der absoluten Lage kann auch die jeweilige Fehlerellipse Ei der Lage berechnet werden.

Angenommen sei nunmehr, dass die mobile Kommunikationseinrichtung 30 bisher noch keine Positionsbestimmung durchgeführt hat und daher der Datenspeicher 31 leer ist. Die Soll-Position der beweglichen Kommunikationseinrichtung 30 zu einem Zeitpunkt taₙ ist in Fig. 4 durch den Punkt Aₛₒₗₗ(taₙ) wiedergegeben, während die Soll-Position zu einem späteren Zeitpunkt tbₙ durch den Punkt Bₛₒₗₗ(tbₙ) dargestellt ist. Eine Linie 90 zwischen den beiden Punkten beschreibt beispielhaft die tatsächliche Bewegung der mobilen Kommunikationseinrichtung 30 zwischen den Zeitpunkten taₙ und tbₙ.

Nunmehr sei angenommen, dass zu einem ersten Zeitpunkt taₙ erstmalig die Positionsinformation bzw. Position der beweglichen Kommunikationseinrichtung 30 bestimmt wird, mittels des GPS-Empfängers 34 oder WLAN-basiert, und dass im Wesentlichen zu einem aktuellen, späteren Zeitpunkt tbₙ eine verbesserte aktuelle Positionsinformation gültig für den Zeitpunkt tbₙ in Echtzeit ermittelt werden soll. Der Index n, der die Anzahl von Bearbeitungsintervallen bezeichnet, kann in diesem Fall auf 1 gesetzt werden. Dieser Positionsinformation, die neben den Positionskoordinaten auch deren Genauigkeit enthalten kann, wird der Zeitpunkt taₙ zugeordnet und beide Daten können im Datenspeicher 31 gespeichert werden. Die dazugehörende Position ist in Fig. 4 mit Aᵢₛₜ(taₙ) bezeichnet. Die um den Punkt Aᵢₛₜ(taₙ) gezeichnete Fehlerellipse E1 gibt beispielsweise die berechnete Genauigkeit wieder. Weiterhin sei angenommen, dass die Auswerteeinrichtung 20 eine für den gleichen Zeitpunkt taₙ gültige Positionszusatzinformation bereitstellt und diese Information zur mobilen Kommunikationseinrichtung 30 übertragen wird. Etwa zum zweiten Zeitpunkt tbₙ wird die Positionszusatzinformation, gültig für Zeitpunkt taₙ, zusammen mit dem ihr zugeordneten Zeitstempel, der den Zeitpunkt taₙ enthält, von der mobilen Kommunikationseinrichtung 30, beispielsweise mittels der WLAN-Funkschnittstelle 37 empfangen. Auch die Positionszusatzinformation und der dazugehörende Zeitstempel können im Datenspeicher 31 abgelegt werden. Zwischen dem ersten Zeitpunkt taₙ und dem zweiten Zeitpunkt tbₙ erfasst zum Beispiel der Bewegungssensor 33 die relative Bewegung der mobilen Kommunikationseinrichtung 30. Die dazugehörenden Bewegungsdaten bzw. bewegungsbezogenen Informationen können ebenfalls zusammen mit dem Bearbeitungsintervall, welches durch den ersten und zweiten Zeitpunkt definiert wird, unter Steuerung des Mikroprozessors 38 im Datenspeicher 31 abgelegt werden. Die bewegungsbezogenen Informationen können zusätzlich oder alternativ Informationen, die aus Bewegungsmodellen gewonnen werden, oder Positionsinformationen, die nur vom GPS-Empfänger 34 oder WLAN-basiert zwischen dem ersten Zeitpunkt taₙ und dem zweiten Zeitpunkt tbₙ bereitgestellt werden, enthalten. Im Wesentlichen zum Zeitpunkt tbₙ liest die Steuereinrichtung 38 die erforderlichen Daten aus dem Datenspeicher 31 aus und
a) bestimmt im Wesentlichen zum Zeitpunkt tbₙ unter Anwendung eines geeigneten, im Programmspeicher 32 hinterlegten Algorithmus eines mathematischen Modells eine zum ersten Zeitpunkt taₙ gültige Positionsinformation in Abhängigkeit von der dem ersten Zeitpunkt taₙ zugeordneten Positionsinformation, welche vom GPS-Empfänger 34 bereitgestellt oder WLAN-basiert bestimmt wird, und von der dem ersten Zeitpunkt taₙ zugeordneten Positionszusatzinformation neu
b) und außerdem ermittelt sie hierauf aufbauend aus der für den Zeitpunkt taₙ neu bestimmten Positionsinformation, welche für den ersten Zeitpunkt taₙ gültig ist, und aus den zwischen dem ersten Zeitpunkt taₙ und dem zweiten Zeitpunkt tbₙ bereitgestellten bewegungsbezogenen Informationen die verbesserte aktuelle Positionsinformation, welche für den zweiten Zeitpunkt tbₙ gültig ist.

Diese Position lag bisher je nach Algorithmus als Bᵢₛₜ(tbₙ) oder B0(tbₙ) oder einem gewichteten Mittel aus beiden Werten vor, wobei Bᵢₛₜ(tbₙ) zum Beispiel die nur mit GPS Daten des GPS-Empfängers 34 oder WLAN-basiert berechnete Position ist und B0 (tbₙ) additiv aus Aᵢₛₜ(taₙ) plus der Bewegungsberechnung von taₙ bis tbₙ folgt. Im Wesentlichen wird zum zweiten, aktuellen Zeitpunkt tbₙ eine gegenüber dem Punkt Bᵢₛₜ(tbₙ) oder B0(tbₙ) oder einem auf einer Gewichtung aus beiden resultierenden nicht dargestellten Punkt verbesserte aktuelle Positionsinformation B1 (tbₙ) zum Gültigkeitszeitpunkt tbₙ für die bewegliche Kommunikationseinrichtung 30 in Echtzeit erhalten. Sofern Bᵢₛₜ (tbₙ) eine ausreichende gute Genauigkeit gegenüber den anderen Eingabewerten hat, kann Bᵢₛₜ(tbₙ) ebenfalls bei der Berechnung von B1(tbₙ) genutzt werden.

Das Ergebnis einer beispielhaften Anwendung des Algorithmus auf die Eingangsgrößen, das sind vorzugsweise die in der Positionszusatzinformation enthaltenen Korrekturdaten und deren Genauigkeit, vorzugsweise die in der Positionsinformationen enthaltenen Positionskoordinaten und deren Genauigkeit zum Zeitpunkt taₙ, sowie die zwischen dem ersten Zeitpunkt taₙ und dem zweiten Zeitpunkt tbₙ bestimmten bewegungsbezogenen Informationen und deren Genauigkeiten, kann anhand der Fig. 4 illustriert werden.

Wenn die Positionsinformationen, die vom GPS-Empfänger 34 bereitgestellt oder WLAN-basiert bestimmt werden und im Zeitraum taₙ bis tbₙ und hier insbesondere zum Zeitpunkt tbₙ eine ausreichend hohe Genauigkeit besitzen, können diese Positionsinformationen ebenfalls bei der Ermittlung der aktuellen Positionsinformation für den Zeitpunkt tbₙ in die Berechnungen einfließen. Diese Positionsinformationen sind dann in den bewegungsbezogenen Informationen mit enthalten.

Die Abschätzungen hierfür sind mit bekannten Methoden vorab möglich und können in der Kommunikationseinrichtung 30 in Echtzeit getroffen werden.

In Fig. 4 wurde auf die Berücksichtigung dieser zwischen taₙ und tbₙ bestimmten Positionsinformationen verzichtet. Außerdem wurde eine bestimmte Genauigkeit für die relativen Positionsänderungen aufgrund eines Bewegungssensors angenommen, deren Ausmaß in Fig. 4 nicht explizit gekennzeichnet ist, aber aus den resultierenden Fehlerellipsen der Berechnungen für E4 von der Größenordnung her ableitbar ist. Außerdem wurde vorgegeben, dass große Positionsänderungen auch größere absolute Fehleranteile hervorrufen, was durch die unterschiedlichen Hauptachslängen der resultierenden Fehlerellipse E4 in Fig. 4 erkennbar ist.

Eine erste Verbesserung der Positionsbestimmung kann dadurch erzielt werden, dass unter Berücksichtigung der dem Zeitpunkt taₙ zugeordneten Positionszusatzinformationen die Genauigkeit der Position der beweglichen Kommunikationseinrichtung 30, welche in Fig. 4 beispielhaft durch den Punkt Aᵢₛₜ(taₙ) dargestellt ist, erhöht wird, so dass die verbesserte Position der beweglichen Kommunikationseinrichtung 30 einem Punkt A1(tbₙ) entspricht. Es ist wichtig darauf hinzuweisen, dass die Positionsbestimmung des Punktes A1(tbₙ) zwar erst zum Zeitpunkt tbₙ erfolgt, aber der Punkt A1(tbₙ) lediglich die verbesserte Position der mobilen Kommunikationseinrichtung 30 gültig für den Zeitpunkt taₙ darstellt. Der Punkt der Position A1(tbₙ) liegt daher in der Vergangenheit. Um den Punkt A1(tbₙ) ist wiederum beispielhaft eine berechnete Fehlerellipse E3 gezeichnet. Die erste Verbesserung der Positionsbestimmung bezieht sich auf die Position zum Zeitpunkt taₙ und ist ohne Kenntnis zusätzlicher, nach dem Zeitpunkt taₙ gültiger Informationen auch eine Verbesserung für eine Aussage, bei der die Position statistisch betrachtet für den Zeitpunkt tbₙ gültig sein könnte, da diese Position einen Wahrscheinlichkeitsbezug zur wahrscheinlichsten Position zum Zeitpunkt taₙ hat.

Mit der Kenntnis zusätzlicher nach dem Zeitpunkt taₙ gültiger Informationen kann eine zweite Verbesserung der Positionsbestimmung für den aktuellen Zeitpunkt tbₙ dadurch erzielt werden, dass die bewegungsbezogenen Informationen, die beispielsweise einen dreidimensionalen Vektor definieren, der die resultierende Positionsänderung der beweglichen Kommunikationseinrichtung 30 in x-, y- und/oder z-Richtung zwischen einem ersten Zeitpunkt taₙ und einem zweiten Zeitpunkt tbₙ und gegebenenfalls deren Genauigkeiten wiedergibt, zu den Positionskoordinaten des Punktes A1(tbₙ) addiert werden. Dann gelangt man zu einer neu bestimmten Position, welche in Fig. 4 mit B1(tbₙ) bezeichnet ist. Eine Linie 70, welche den Punkt A1(tbₙ) mit dem Punkt B1(tbₙ) verbindet, beschreibt beispielhaft die vom Bewegungssensor 33 erfasste Bewegung der mobilen Kommunikationseinrichtung 30 zwischen den Zeitpunkten taₙ und tbₙ. Der Punkt B1(tbₙ) entspricht somit der verbesserten aktuellen Position der beweglichen Kommunikationseinrichtung 30, welche im Wesentlichen zum aktuellen Zeitpunkt tbₙ berechnet wurde und für diesen Zeitpunkt gültig ist. Die um den Punkt B1 gezeichnete Fehlerellipse E4 gibt beispielhaft die berechnete Genauigkeit wieder. Der Pfeil zwischen dem Punkt B1(tbₙ) und einem Punkt Bᵢₛₜ (tbₙ), welcher der ohne Korrektur bestimmten Position zum Zeitpunkt tbₙ entspricht, zeigt die Verbesserung des Verfahrens gegenüber einer nicht korrigierten Positionsbestimmung an.

Je nach Nutzung unterschiedlicher Datenquellen und mathematischer Auswertemodelle können beispielsweise alle Berechnungen in einem Guss, das heißt in einem einzigen Gleichungssystem, zur Bestimmung der aktuellen Position der beweglichen Kommunikationseinrichtung 30 durchgeführt werden oder auch eine sequentielle Berechnung und/oder rekursive Filtertechniken genutzt werden.

Weiterhin sei angemerkt, dass die Auswahl eines geeigneten mathematischen Modells auf den statistischen Eigenschaften der Beobachtungen - das sind vorzugsweise die Positionsinformationen, Positionszusatzinformationen und bewegungsbezogenen Informationen - basieren kann, wobei insbesondere Modelle zweckmäßig sind, welche die Aufdeckung von "Ausreißern" in den Beobachtungen ermöglichen. Hierbei können auch die Genauigkeiten aller Eingabegrößen mit berücksichtigt werden. Verschiedene geeignete mathematische Modelle und unterschiedliche algorithmische Implementierungen sind bekannt.

Wie bereits angedeutet, kann die Position des Punktes A1(tbₙ), die zum Zeitpunkt tbₙ berechnet wurde, aber für den Zeitpunkt taₙ gültig ist, dadurch bestimmt werden, dass der Mikroprozessor 38 die dem ersten Zeitpunkt taₙ zugeordnete Positionsinformation nur in Abhängigkeit von der dem ersten Zeitpunkt taₙ zugeordneten Positionszusatzinformation bestimmt. Eine solche Positionsbestimmung A1(tbₙ) ist als Sonderfall dann auch zugleich die aktuelle Position B1(tbₙ), also der in Echtzeit berechneten Position, die zum aktuellen Zeitpunkt tbₙ gültig ist, wenn eine Prüfeinrichtung der mobilen Kommunikationseinrichtung 30 festgestellt hat, dass entweder im Wesentlichen zwischen dem ersten Zeitpunkt taₙ und dem zweiten Zeitpunkt tbₙ keine translatorische Bewegung der beweglichen Kommunikationseinrichtung 30 vorliegt, oder dass alle translatorischen Bewegungen in diesem Zeitraum zum Zeitpunkt tbₙ in Summe im Wesentlichen signifikant ausreichend genau den Nullvektor ergeben. Die Funktion der Prüfeinrichtung kann die Steuereinrichtung 38 ausführen. Je nach Größe der sich fortpflanzenden Einzelfehler der inkrementellen Bewegungen auf die resultierende aufsummierte Translation kann die absolute Position zwar keine Veränderung erhalten, aber die Genauigkeit der Position kann sich sogar erheblich verschlechtern, wodurch die Steuereinrichtung 38 veranlasst sein kann, auch bei einem Nullvektor die Berechnungen durchzuführen, um die resultierende Genauigkeit besser berechnen zu können.

In Fig. 4 ist noch ein weiterer Punkt B0(tbₙ) mit der Positionsgenauigkeit Fehlerellipse E5 dargestellt, der die Positionsinformation, welche zum zweiten Zeitpunkt tbₙ berechnet wurde und für diesen Zeitpunkt gültig ist, der beweglichen Kommunikationseinrichtung 30 wiedergibt, ohne dass die für den Zeitpunkt taₙ gültige Positionszusatzinformation genutzt wird. Diese Position kann dadurch bestimmt werden, dass der Mikroprozessor 38 die dem ersten Zeitpunkt taₙ zugeordnete Positionsinformation nur in Abhängigkeit von den zwischen den Zeitpunkten taₙ und tbₙ bestimmten bewegungsbezogenen Informationen, d. h. ohne die dem ersten Zeitpunkt taₙ zugeordneten Positionszusatzinformation, neu bestimmt. Eine solche Positionsbestimmung wird zum Beispiel durchgeführt, wenn eine Prüfeinrichtung der mobilen Kommunikationseinrichtung 30 festgestellt hat, dass zwar keine dem ersten Zeitpunkt taₙ zugeordnete Positionszusatzinformation in der beweglichen Kommunikationseinrichtung 30 angekommen sind, sich die bewegliche Kommunikationseinrichtung 30 zwischen dem ersten Zeitpunkt taₙ und dem zweiten Zeitpunkt tbₙ aber bewegt hat, wie dies durch die Linie 60 angedeutet wird, und zum Beispiel zum Zeitpunkt tbₙ keine Positionsinformation Bᵢₛₜ(tbₙ) durch den GPS Empfänger 34 geliefert wird oder WLAN-basiert bestimmbar ist. Die Funktion der Prüfeinrichtung kann wiederum die Steuereinrichtung 38 ausführen. Ein Vorteil dieses Verfahrens kann darin gesehen werden, dass, selbst wenn die dem Zeitpunkt taₙ zugeordneten Positionszusatzinformationen nicht an der mobilen Kommunikationseinrichtung 30 angekommen sind, eine Korrektur, das heißt eine Berechnung der aktuellen Positionsinformation möglich ist. Würde zusätzlich auch die Positionsinformation Bᵢₛₜ(tbₙ) durch den GPS Empfänger 34 geliefert oder WLAN-basiert bestimmt worden sein, so könnte Bᵢₛₜ(tbₙ) sogar zur Berechnung von B0(tbₙ) zusätzlich herangezogen werden, wodurch sich die Fehlerellipse verbessern und die Lage sich in Richtung Bᵢₛₜ(tbₙ) verschieben würde. Die Grafik in Fig. 4 enthält dieses nicht.

Angemerkt sei, dass die Positionskoordinaten und gegebenenfalls deren Genauigkeit umso genauer bestimmt werden können, je genauer zum Beispiel die vom Bewegungssensor 33 bestimmten bewegungsbezogenen Informationen im Vergleich zu den vom GPS-Empfänger 34 oder WLAN-basiert bestimmten Positionsinformationen sind, welche durch die Positionszusatzinformationen korrigiert werden, und je geringer die erfassten Bewegungsdaten mit den Positionsinformationen korreliert sind. Die Kenntnis hierüber kann die Steuereinrichtung 38 nutzen, um die Abläufe zur Positionsinformationsbestimmung geeignet zu steuern. Auch diese vereinfachte Vorgehensweise kann noch dadurch verbessert werden, dass die nur vom GPS-Empfänger 34 oder WLAN-basiert bereitgestellten Positionsbestimmungen zwischen dem Zeitpunkt taₙ bis einschließlich tbₙ in einer Ausgleichung zur Positionsinformationsbestimmung in Echtzeit genutzt werden. Schätzverfahren hierzu sind bekannt.

Angemerkt sei ferner, dass neben den Positionskoordinaten des Punktes A1(tbₙ), des Punktes B0(tbₙ) oder des Punktes B1(tbₙ) auch die Genauigkeit der jeweiligen Positionskoordinaten bestimmt werden kann, indem eine Fehlerfortpflanzung der Fehler der Eingangsgrößen, das sind insbesondere die Positionszusatzinformationen und die Positionsinformation zum Zeitpunkt taₙ sowie die zwischen den Zeitpunkten taₙ und tbₙ bestimmten Bewegungsdaten, auf die korrigierte Zielgröße berechnet wird. Die Fehler der Eingangsgrößen werden hierbei durch die Bestimmungsmethoden mitgeliefert und/oder vorab geschätzt oder, wenn möglich, zum Beispiel im Schätzverfahren mit bestimmt. Die Methoden der Fehlerfortpflanzung und Schätzverfahren zur Positionsbestimmung mit Berücksichtigung der Genauigkeiten von Eingabegrößen und die Eliminierung von grob falschen Messwerten, den sogenannten Ausreißern, durch das Schätzverfahren und Ausreißertests oder die Anwendung von robusten Schätzverfahren sind dem Fachmann hinlänglich bekannt.

Im Folgenden wird anhand von Figur 5 ein weiteres Szenario erläutert.

Fig. 4 ist in Fig. 5 enthalten. Zusätzlich sind die Punkte A2(tbₙ), A'2(tbₙ₋₁), A"2(tbₙ₋₂) und B2(tbₙ) eingezeichnet, deren Bedeutung nachfolgend erläutert wird.

Angenommen sei, dass bereits zu den Zeitpunkten taₙ₋₁ und taₙ₋₂, welche zeitlich vor dem Zeitpunkt taₙ liegen, Positionszusatzinformationen von der Auswerteeinrichtung 20 bereitgestellt und zur beweglichen Kommunikationseinrichtung 30 übertragen worden sind. Diese Positionszusatzinformationen wurden etwa zu den Zeitpunkten tbₙ₋₁ bzw. tbₙ₋₂, welche zeitlich vor dem Zeitpunkt tbₙ liegen, von der beweglichen Kommunikationseinrichtung 30 empfangen und im Datenspeicher 31 mit den zugeordneten Zeitpunkten abgelegt. Weiterhin sei angenommen, dass der GPS-Empfänger 34 Positionsinformationen zu den Zeitpunkten taₙ₋₁ und taₙ₋₂ bestimmt hat oder diese WLAN-basiert bestimmt wurden. Diese Positionsinformationen wurden zusammen mit den zugeordneten Zeitpunkten im Datenspeicher 31 abgelegt. Weiterhin sei angenommen, dass, wie bereits zuvor hinsichtlich Fig. 4 ausführlich erläutert, eine für den Zeitpunkt taₙ₋₁ gültige Positionsinformation in Abhängigkeit von der dem ersten Zeitpunkt taₙ₋₁ zugeordneten Positionsinformation, welche vom GPS-Empfänger 34 bereitgestellt oder WLAN-basiert bestimmt worden ist, und einer dem ersten Zeitpunkt taₙ₋₁ zugeordneten Positionszusatzinformation im Wesentlichen zum Zeitpunkt tbₙ₋₁ neu bestimmt worden ist, um eine verbesserte aktuelle Positionsinformation im Wesentlichen zum Zeitpunkt tbₙ₋₁ erhalten zu haben. In ähnlicher Weise wurde eine für den jeweiligen ersten Zeitpunkt taₙ₋₂ gültige Positionsinformation in Abhängigkeit von der dem ersten Zeitpunkt taₙ₋₂ zugeordneten Positionsinformation, welche vom GPS-Empfänger 34 bereitgestellt oder WLAN-basiert bestimmt worden ist, und einer von der dem jeweiligen ersten Zeitpunkt taₙ₋₂ zugeordneten Positionszusatzinformation im Wesentlichen zum Zeitpunkt tbₙ₋₂ neu bestimmt, um eine verbesserte aktuelle Positionsinformation im Wesentlichen zum Zeitpunkt tbₙ₋₂, gültig für den Zeitpunkt taₙ₋₂, erhalten zu haben. Die in Fig. 5 dargestellten Punkte A"2(tbₙ₋₂) und A'2(tbₙ₋₁) geben die verbesserte Position der beweglichen Kommunikationseinrichtung 30 hinsichtlich der Zeitpunkte taₙ₋₁ bzw. taₙ₋₂ wieder. Die Berechnungen dieser Punkte A"2(tbₙ₋₂) und A'2(tbₙ₋₁) können zusätzlich noch durch Verwendung von Bewegungsdaten und/oder Bewegungsmodellen zur Bewegungsänderung und/oder durch weitere nur vom GPS-Empfänger 34 bereitgestellten oder WLAN-basiert bestimmten Positionsinformationen, die vor dem Zeitpunkt taₙ₋₁ bis zum Zeitpunkt taₙ₋₂ oder noch davor gelten, verbessert werden, wobei die dazugehörigen Daten zum Erfassungs- oder Berechnungszeitpunkt abgespeichert worden sein können. Solche Verbesserungen können möglichst frühzeitig oder spätestens zum Zeitpunkt tbₙ₋₁ durchgeführt werden. Nunmehr sei angenommen, dass im Wesentlichen zum aktuellen Zeitpunkt tbₙ eine weitere, dem Zeitpunkt taₙ zugeordnete Positionszusatzinformation der mobilen Kommunikationseinrichtung 30 zur Verfügung steht. Zudem wurde zum Zeitpunkt taₙ vom GPS-Empfänger 34 oder WLAN-basiert eine Positionsinformation Aᵢₛₜ(taₙ) mit Fehlerellise E1 bestimmt. Weiterhin sei angenommen, dass der Bewegungssensor 33 die Bewegung der mobilen Kommunikationseinrichtung 30 zwischen den Zeitpunkten taₙ₋₂ und tbₙ erfasst hat. Die dazugehörenden Bewegungsdaten können im Datenspeicher 31 abgelegt sein.

Im Wesentlichen zum Zeitpunkt tbₙ liest die Steuereinrichtung 38 die erforderlichen Daten aus dem Datenspeicher 31 aus und bestimmt unter Anwendung eines geeigneten, im Programmspeicher 32 hinterlegten Algorithmus eines mathematischen Modells eine dem ersten Zeitpunkt taₙ zugeordnete Positionsinformation in Abhängigkeit von der dem ersten Zeitpunkt zugeordneten Positionsinformation, welche vom GPS-Empfänger 34 bereitgestellt oder WLAN-basiert bestimmt worden ist, und von der dem ersten Zeitpunkt taₙ zugeordneten Positionszusatzinformation neu. In Abhängigkeit von der für den Zeitpunkt taₙ neubestimmten Positionsinformation, den zwischen dem ersten Zeitpunkt taₙ₋₂ und dem zweiten Zeitpunkt tbₙ bestimmten Bewegungsdaten und/oder Bewegungsmodellen und/oder Modellen zur Bewegungsänderung und/oder in Abhängigkeit von weiteren nur vom GPS-Empfänger 34 bereitgestellten oder WLAN-basiert bestimmten Positionsinformationen und den bestmöglich verbesserten Positionsinformationen zu den Zeitpunkten taₙ₋₁ und taₙ₋₂, wird im Wesentlichen zum Zeitpunkt tbₙ eine gegenüber dem Punkt Aᵢₛₜ(taₙ) und seiner Fehlerellipse E1 verbesserte aktuelle Positionsinformation B2(tbₙ) mit Fehlerellipse E8 der beweglichen Kommunikationseinrichtung 30 in Echtzeit für den Zeitpunkt tbₙ ermittelt . Das Ergebnis einer beispielhaften Anwendung des Algorithmus auf die Eingangsgrößen, das sind vorzugsweise die in der Positionszusatzinformation enthaltenen Korrekturdaten und deren Genauigkeit, vorzugsweise die in der Positionsinformationen enthaltenen Positionskoordinaten und deren Genauigkeit zum Zeitpunkt taₙ, sowie die zwischen dem ersten Zeitpunkt taₙ und dem zweiten Zeitpunkt tbₙ bestimmten Bewegungsdaten, kann anhand der Fig. 5 illustriert werden. Als Zwischenergebnis dieses Verfahrens wird zum Zeitpunkt tbₙ noch der Punkt A2(tbₙ) mit Fehlerellipse E6 als Verbesserung des Punktes A1(tbₙ) mit Fehlerellipse E3 berechnet, wobei beide Punkte für den Zeitpunkt taₙ gültig sind.

Es ist wichtig darauf hinzuweisen, dass die Positionsbestimmung des Punktes A2(tbₙ) zwar erst zum Zeitpunkt tbₙ erfolgt, aber der Punkt A2(tbₙ) lediglich die verbesserte Position der mobilen Kommunikationseinrichtung 30 zum Zeitpunkt taₙ darstellt. Der Punkt A2(tbₙ) liegt daher in der Vergangenheit. Um den Punkt A2(tbₙ) ist wiederum beispielhaft eine berechnete Fehlerellipse gezeichnet. Wie aus Fig. 5 ersichtlich, kann das Verfahren, welches Daten aus der Vergangenheit mit berücksichtigt, eine genauere Position A2(tbₙ) als das hinsichtlich Fig. 4 beschriebene Verfahren liefern, welches die Position A1(tbₙ) liefert.

Entsprechendes gilt analog für die Punkte B2(tbₙ) und B1(tbₙ). Die Linie 80, welche den Punkt A2(tbₙ) mit dem Punkt B2(tbₙ) verbindet, beschreibt beispielhaft die im Berechnungsverfahren geglättete relative Bewegung der mobilen Kommunikationseinrichtung 30 zwischen den Zeitpunkten taₙ und tbₙ. Der Pfeil zwischen dem Punkt B1(tbₙ) und dem Punkt B2(tbₙ) zeigt die Verbesserung des Verfahrens gegenüber dem Verfahren an, welches zuvor anhand der Fig. 4 erläutert wurde. Die verbesserte Positionsinformation des Punktes B2(tbₙ) kann wiederum im Datenspeicher 31 abgelegt werden, um für eine spätere, erneut durchzuführende Positionsbestimmung zur Verfügung zu stehen.

So ist denkbar, dass eine für wenigstens einen späteren ersten Zeitpunkt taₙ₊₁ gültige Positionszusatzinformation von der Auswerteeinrichtung 20 bereitgestellt wird und dass im Wesentlichen zu einem späteren zweiten Zeitpunkt tbₙ₊₁ die Positionszusatzinformation der beweglichen Kommunikationseinrichtung 30 zur Verfügung steht. Der GPS-Empfänger 34 bestimmt zu dem späteren ersten Zeitpunkt taₙ₊₁ eine Positionsinformation, die die Position der beweglichen Kommunikationseinrichtung zum Zeitpunkt taₙ₊₁ definiert oder diese wird WLAN-basiert bestimmt. Zwischen den Zeitpunkten taₙ₊₁ und tbₙ₊₁ erfasst der Bewegungssensor 33 die Bewegung der mobilen Kommunikationseinrichtung 30. Die dazugehörenden Bewegungsdaten bzw. bewegungsbezogenen Informationen können wieder im Datenspeicher 31 abgelegt werden. Gegebenenfalls können die nur vom GPS-Empfänger 34 zwischen den Zeitpunkten taₙ₊₁ und tbₙ₊₁ bereitgestellten oder WLAN-basiert bestimmten Positionsinformationen und aus Bewegungsmodellen gewonnene Bewegungsdaten als weitere bewegungsbezogene Informationen im Datenspeicher 31 abgelegt werden.

Im Wesentlichen zum Zeitpunkt tbₙ₊₁ liest die Steuereinrichtung 38 die erforderlichen Daten aus dem Datenspeicher 31 aus und bestimmt unter Anwendung eines geeigneten, im Programmspeicher 32 hinterlegten Algorithmus eines mathematischen Modells eine für den Zeitpunkt taₙ₊₁ gültige Positionsinformation beispielsweise in Abhängigkeit von der dem Zeitpunkt taₙ₊₁ zugeordneten Positionsinformation, welche vom GPS-Empfänger 34 bereitgestellt oder WLAN-basiert bestimmt worden ist, und von der dem ersten Zeitpunkt taₙ₊₁ zugeordneten Positionszusatzinformation neu, und der Bewegungsdaten zwischen den Zeitpunkten taₙ und taₙ₊₁, und ermittelt basierend auf der für den Zeitpunkt taₙ₊₁ neu bestimmten Positionsinformation und beispielsweise in Abhängigkeit von den zwischen dem ersten Zeitpunkt taₙ₊₁ und dem zweiten Zeitpunkt tbₙ₊₁ bestimmten bewegungsbezogenen Informationen, und, sofern vorhanden, von den bestmöglich verbesserten Positionsinformationen zu den Zeitpunkten taₙ₋₁ und taₙ₋₂ und deren geometrischen Bezug zur Position gültig zum Zeitpunkt taₙ über die dazugehörigen Bewegungsdaten im Wesentlichen zum Zeitpunkt tbₙ₊₁ eine verbesserte aktuelle Positionsinformation der beweglichen Kommunikationseinrichtung 30 in Echtzeit gültig für den Zeitpunkt tbₙ₊₁. Die mathematischen Modelle hierzu sind dem Fachmann bekannt.

Dieses Verfahren kann zu späteren Zeitpunkten tbₙ₊ₖ für die Zeiträume taₙ₊ₖ bis tbₙ₊ₖ wiederholt auf die im Datenspeicher 31 gespeicherten Daten, das sind insbesondere bereits verbesserte Positionsinformationen, Positionszusatzinformation und Bewegungsdaten und Parameter zur Definition der Bewegungsmodelle, angewandt werden.

An dieser Stelle sei angemerkt, dass der verwendete Begriff "Zeitpunkt" und die dazugehörenden Bezeichnungen taₙ und tbₙ nicht einschränkend zu verstehen sind, dass das oben erläuterte Verfahren nur zu diskreten Zeitpunkten durchgeführt werden kann, wie dies lediglich der einfacheren Darstellung in den Fig. 4 und 5 gezeigt ist. Das Verfahren bzw. der Algorithmus kann auch kontinuierlich von der mobilen Kommunikationseinrichtung 30 ausgeführt werden. Zudem können auch bei Zwischenzeiträumen mit teilweisen oder vollständigen Datenlücken, beispielsweise durch Nutzung von Bewegungsmodellen für die Kommunikationseinrichtung 30, kontinuierlich die verbesserten Positionsinformationen in Echtzeit berechnet werden.

Wir betrachten nunmehr ein weiteres Szenario, bei dem ein Vorhersagealgorithmus verwendet wird, um Positionszusatzinformationen mit Hilfe der Interpolation oder der Extrapolation vorherzusagen. Die Vorhersagealgorithmen können in der beweglichen Kommunikationseinrichtung 30 oder zweckmäßiger Weise in der Auswerteeinrichtung 20 implementiert sein und zur Schließung von Datenlücken genutzt werden.

Angenommen sei nunmehr, dass die Auswerteeinrichtung 20 zu einem Zeitpunkt taₙ nicht nur eine dem ersten Zeitpunkt taₙ zugeordnete Positionszusatzinformation bereitstellt, sondern beispielsweise drei Positionszusatzinformationen vorhersagt, die jeweils einem dritten Zeitpunkt taₙ₊₁, taₙ₊₂ bzw. taₙ₊₃ zugeordnet werden. Die Zeitpunkte taₙ₊₁, taₙ₊₂ und taₙ₊₃ liegen vor einem zweiten Zeitpunkt tb_{n,} zu dem die aktuelle Position der mobilen Bewegungseinrichtung 30 verbessert bestimmt werden soll. Sowohl die dem ersten Zeitpunkt taₙ zugeordnete Positionszusatzinformation als auch die drei vorhergesagten Positionszusatzinformationen werden im Wesentlichen zum Zeitpunkt taₙ von der Auswerteeinrichtung 20 erzeugt und danach zur mobilen Kommunikationseinrichtung 30 übertragen und stehen dort im Wesentlichen zum Zeitpunkt tbₙ der mobilen Kommunikationseinrichtung 30 zur Verfügung. Alle Positionszusatzinformationen können zusammen mit den ihnen zugeordneten Zeitpunkten im Datenspeicher 31 gespeichert werden. Ferner sei angenommen, dass auch die vom GPS-Empfänger 34 oder WLAN-basiert zu den Zeitpunkten taₙ₊₁, taₙ₊₂ und taₙ₊₃ bestimmten Positionsinformationen und die vom Bewegungssensor 33 bestimmten Bewegungsdaten, die zwischen den Zeitpunkten taₙ und tbₙ erfasst worden sind, im Datenspeicher 31 abgelegt sind. Der Mikroprozessors 38 ist dazu ausgebildet, ein im Programmspeicher 32 abgelegtes Programm auszuführen, um die den Zeitpunkten taₙ₊₁, taₙ₊₂ und taₙ₊₃ zugeordneten Positionsinformationen mittels der jeweiligen Positionszusatzinformationen, welche den Zeitpunkten taₙ₊₁, taₙ₊₂ und taₙ₊₃ zugeordnet sind, zu korrigieren. Anschließend oder zeitgleich wird die dem ersten Zeitpunkt taₙ zugeordnete Positionsinformation in Abhängigkeit von den korrigierten, den Zeitpunkten taₙ₊₁, taₙ₊₂ und taₙ₊₃ zugeordneten Positionsinformationen, von der dem Zeitpunkt taₙ zugeordneten Positionszusatzinformation und von den Bewegungsdaten und Bewegungsmodellen, sofern vorhanden, neu bestimmt, um eine verbesserte aktuelle zum Zeitpunkt tbₙ und gültig für den Zeitpunkt tbₙ zu erhalten. Alternativ kann auch anschließend oder zeitgleich wie im vorher beschriebenen Verfahren mit den nur vom GPS-Empfänger 34 bereitgestellten oder WLAN-basiert bestimmten Positionsinformationszwischenwerten vorgegangen werden, wobei nun die Positionsinformationen durch die Inter- oder Extrapolationswerte der Positionszusatzinformationen vorab verbessert werden können.
Obwohl in Verbindung mit den Figuren 4 und 5 nur von Fehlerellipsen als 2-dimensionale Genauigkeitsmaße gesprochen wurde, beschränken sich die Verfahren nicht auf Normalverteilte Messgrößen und die entsprechenden Schätzverfahren.

Einige Aspekte werden nachfolgend noch einmal zusammenfassend in Verbindung mit den Figuren illustriert.

Um die Position der beweglichen Kommunikationseinrichtung 30 verbessert bestimmen zu können, werden folgende Verfahrensschritte ausgeführt:
a) Bereitstellen einer positionsbezogenen Information in wenigstens einer ersten beweglichen Kommunikationseinrichtung,
b) Übertragen der positionsbezogenen Information von der wenigstens einen ersten beweglichen Kommunikationseinrichtung zu einer Auswerteeinrichtung,
c) Bestimmen einer Positionszusatzinformation, die einem ersten Zeitpunkt zugeordnet ist, durch die Auswerteinrichtung in Abhängigkeit der empfangenen positionsbezogenen Information,
d) Bereitstellen einer dem ersten Zeitpunkt zugeordneten Positionsinformation in einer zweiten beweglichen Kommunikationseinrichtung,
e) Übertragen der dem ersten Zeitpunkt zugeordneten Positionszusatzinformation von der Auswerteeinrichtung zu der zweiten beweglichen Kommunikationseinrichtung,
f) Bestimmen in der zweiten beweglichen Kommunikationseinrichtung der Integrität der in Schritt d) für den ersten Zeitpunkt bereitgestellten Positionsinformation in Abhängigkeit der Positionszusatzinformation und/oder Neubestimmen in der zweiten beweglichen Kommunikationseinrichtung (30) einer Positionsinformation für den ersten Zeitpunkt (taₙ) in Abhängigkeit der in Schritt d) bereitgestellten, dem ersten Zeitpunkt (taₙ) zugeordneten Positionsinformation und der dem ersten Zeitpunkt (taₙ) zugeordneten Positionszusatzinformation.

Angemerkt sei, dass es sich bei den in Schritt d) bereitgestellten Positionsinformationen vorzugsweise um Positionsinformationen handelt, welche mit Hilfe von Positionszusatzinformationen, die den gleichen Gültigkeitszeitpunkt wie die jeweiligen Positionsinformationen besitzen, korrigiert werden können.

Die Formulierung, dass die Positionszusatzinformation und die Positionsinformation einem ersten Zeitpunkt taₙ zugeordnet sind, bedeutet vorzugsweise, dass die Positionszusatzinformation und die Positionsinformation zum gleichen ersten Zeitpunkt taₙ gültig sind.

Die Positionszusatzinformationen enthalten vorzugsweise zu einem bestimmten ersten Zeitpunkten taₙ zugeordnete Korrekturdaten und gegebenenfalls deren Genauigkeit sowie gegebenenfalls Integritätsinformationen über das Kommunikationssystem 10, 11 oder 12, die insbesondere zur verbesserten Positionsbestimmung verwendet werden können.

Es sei angemerkt, dass die erste bewegliche Kommunikationseinrichtung mit der zweiten beweglichen Kommunikationseinrichtung identisch sein kann. Die erste bewegliche Kommunikationseinrichtung und die zweite bewegliche Kommunikationseinrichtung können aber auch unterschiedliche Kommunikationseinrichtungen, auch unterschiedlich aufgebaute Kommunikationseinrichtungen bezeichnen.

Es können auch Gruppen von beweglichen Kommunikationseinrichtungen vorgesehen sein, von denen eine Gruppe dazu dient, positionsbezogene Informationen zu bestimmen und zu der Auswerteeinrichtung 20 zu übertragen und eine andere Gruppe die von der Auswerteeinrichtung 20 bereitgestellten Positionszusatzinformationen zur verbesserten Positionsbestimmung nutzt, wobei die Gruppen disjunkt sein können oder ganz oder teilweise überlappen können.

Die in Schritt a) bereitgestellte positionsbezogene Information ist insbesondere eine Information, welche in Abhängigkeit eines durch die erste bewegliche Kommunikationseinrichtung empfangbaren Signals ermittelbar ist. Dies kann beispielsweise eine Signaleigenschaft wie eine Signalstärke, eine in dem Signal enthaltene Information oder eine aus einer in dem Signal enthaltenen Information ableitbare bzw. berechenbare Information sein.

Die positionsbezogene Information kann insbesondere auch eine für die erste bewegliche Kommunikationseinrichtung ermittelte Position und gegebenenfalls eine zugeordnete Genauigkeit der ermittelten Position umfassen. Die positionsbezogenen Informationen können aber auch Messdaten sein, in Abhängigkeit derer die Auswerteeinrichtung eine Bestimmung einer Position der ersten beweglichen Kommunikationseinrichtung und gegebenenfalls einer zugeordneten Genauigkeit durchführt. Eine positionsbezogene Information kann aber beispielsweise auch eine vorab bekannte Positionsinformation, beispielsweise die Position einer ortsfesten, zur Nahfeld-Kommunikation ausgebildeten Sendeeinrichtung sein, welche in der ersten beweglichen Kommunikationseinrichtung hinterlegt wird.

Das Bereitstellen einer positionsbezogenen Information in Schritt a) umfasst vorteilhaft ein Empfangen von zur Positionsbestimmung der ersten beweglichen Kommunikationseinrichtung einsetzbaren Signalen durch die erste bewegliche Kommunikationseinrichtung, wobei dies insbesondere Signale eines Positionsbestimmungs-Systems sind, also beispielsweise von einem GPS-Satelliten empfangene Signale oder eine empfangene Signalstärke eines Access Points eines WLAN-basierten Positionsbestimmungssystems.

Ferner kann das Bereitstellen einer positionsbezogenen Information in Schritt a) vorteilhaft ein Empfangen von Signalen von einer weiteren ersten beweglichen Kommunikationseinrichtung umfassen, wobei die erste bewegliche Kommunikationseinrichtung aus den empfangene Signalen eine Entfernung zu der weiteren ersten beweglichen Kommunikationseinrichtung ermitteln kann.

Das Bereitstellen einer positionsbezogenen Information in Schritt a) kann ferner vorteilhaft ein Bestimmen einer Positionsinformation durch die erste bewegliche Kommunikationseinrichtung umfassen, sowie gegebenenfalls einer der Positionsinformation zugeordnete Genauigkeit, insbesondere in Abhängigkeit der empfangene Signale eines Positionsbestimmungs-Systems.

In einer vorteilhaften Ausführungsform des Verfahrens kann ferner vorgesehen sein, dass der Schritt a) ein Übertragen eines Signals von einer kurzreichweitigen Sendeeinrichtung zu der ersten beweglichen Kommunikationseinrichtung, insbesondere mittels Nahfeld-Kommunikation, umfasst, wobei in der ersten beweglichen Kommunikationseinrichtung eine der Sendeeinrichtung zugeordnete Positionsinformation bereitgestellt wird, wobei die der Sendeeinrichtung zugeordnete Positionsinformation insbesondere im Signal der Sendeeinrichtung mitgesendet werden kann.

Das Verfahren umfasst ferner vorteilhaft ein Bereitstellen, in der ersten beweglichen Kommunikationseinrichtung, von bewegungsbezogenen Informationen, wobei die bewegungsbezogenen Informationen die Bewegung der ersten beweglichen Kommunikationseinrichtung zumindest abschnittsweise nach dem Zeitpunkt des Empfangs eines Signals von der kurzreichweitigen Sendeeinrichtung, und insbesondere bis zu dem ersten Zeitpunkt (taₙ), beschreiben.

In einer weiteren vorteilhaften Ausgestaltung des Verfahrens kann vorgesehen sein, dass die Freiheitsgrade der Bewegung der ersten beweglichen Kommunikationseinrichtung in vorbestimmter Weise eingeschränkt sind, wobei die eingeschränkten Freiheitsgrade bei dem Bestimmen von Positionszusatzinformationen berücksichtigt werden.

Besonders vorteilhaft führt die Auswerteeinrichtung 20 in Schritt c) eine Ausgleichsrechnung durch, insbesondere in Abhängigkeit von positionsbezogenen Informationen, welche die Auswerteeinrichtung 20 von einer Vielzahl erster beweglicher Kommunikationseinrichtungen 30 empfangen hat. Besonders vorteilhaft wird eine solche Anzahl erster beweglicher Kommunikationseinrichtungen 30 eingesetzt, dass sich diese gegenseitig geometrisch direkt oder indirekt ausreichend kontrollieren.

Eine Ausgleichungsrechnung ist eine mathematische Optimierungsmethode, um unbekannte Parameter für eine Reihe von Messdaten zu schätzen, wobei typischerweise eine Überbestimmung vorliegt, die es erlaubt, eine bestmögliche Anpassung an ein Modell oder eine Funktion zu ermitteln, wobei beispielsweise die Methode der kleinsten Quadrate zur Anwendung kommt.

Vorzugsweise wird die in der zweiten beweglichen Kommunikationseinrichtung von der Auswerteeinrichtung empfangene, dem ersten Zeitpunkt taₙ zugeordnete Positionszusatzinformation von der zweiten beweglichen Kommunikationseinrichtung für die Positionsbestimmung der zweiten beweglichen Kommunikationseinrichtung zu einem gegenüber dem ersten Zeitpunkt späteren zweiten Zeitpunkt tb_{n,} gültig für die Position zum Zeitpunkt tb_{n,} nur dann genutzt, wenn die Positionszusatzinformation als ausreichend konstant im Zeitraum zwischen dem ersten Zeitpunkt taₙ und dem zweiten Zeitpunkt tbₙ erkannt oder angenommen wird.

Zur verbesserten Bestimmung der aktuellen Position einer beweglichen Kommunikationseinrichtung 30 in Echtzeit sieht das Verfahren vorteilhaft ferner folgende Verfahrensschritte vor:
- Bereitstellen, in der zweiten beweglichen Kommunikationseinrichtung, von bewegungsbezogenen Informationen, wobei die bewegungsbezogenen Informationen die Bewegung der zweiten beweglichen Kommunikationseinrichtung zumindest abschnittsweise zwischen dem ersten Zeitpunkt taₙ und einem zweiten Zeitpunkt tbₙ beschreiben, wobei der erste Zeitpunkt taₙ vor dem zweiten Zeitpunkt tbₙ liegt, und
- Ermitteln in der zweiten beweglichen Kommunikationseinrichtung 30 einer verbesserten aktuellen Positionsinformation der zweiten beweglichen Kommunikationseinrichtung 30 für den zweiten Zeitpunkt tbₙ in Abhängigkeit von der für den ersten Zeitpunkt taₙ neubestimmten Positionsinformation und den bereitgestellten bewegungsbezogenen Informationen.

Angemerkt sei, dass der Index "n" eine Zahl größer oder gleich 1 definieren kann, die einen n-ten ersten Zeitpunkt und einen n-ten zweiten Zeitpunkt kennzeichnet. In diesem Sinne zeigt der Index "n" an, dass ein erster Zeitpunkt taₙ und ein dazugehörender zweiter Zeitpunkt tbₙ die zeitlichen Grenzen eines n-ten Bearbeitungs- bzw. Berechnungsintervalls definieren.

Ferner wird eine bewegliche Kommunikationseinrichtung 30 zum Bereitstellen positionsbezogener Informationen bereitgestellt, welche zur Bestimmung von Positionszusatzinformationen durch eine Auswerteeinrichtung nutzbar sind. Die bewegliche Kommunikationseinrichtung 30 weist eine Empfangseinrichtung 34 bzw. 37 auf, die dazu ausgebildet ist, Positionssignale von einer Komponente 40 bzw. 50 eines Navigationssystems zu empfangen, um Positionsinformationen ermitteln zu können, welche die Position der beweglichen Kommunikationseinrichtung 30 für einen ersten Zeitpunkt taₙ definieren, wobei die bewegliche Kommunikationseinrichtung 30 ferner dazu ausgebildet ist, wenigstens eine positionsbezogene Information bereitzustellen und zu einer Auswerteeinrichtung 20 zu übertragen, wobei die positionsbezogene Information insbesondere in empfangenen Positionssignalen enthaltene Informationen und/oder eine ermittelte Positionsinformation umfasst.

Vorteilhaft umfasst die bewegliche Kommunikationseinrichtung 30 eine Bewegungserfassungseinrichtung 33 zum Bereitstellen von bewegungsbezogenen Informationen, welche die Bewegung der beweglichen Kommunikationseinrichtung 30 wenigstens abschnittsweise zwischen einem ersten Zeitpunkt taₙ und einem zweiten Zeitpunkt tbₙ beschreiben, wobei die positionsbezogene Information die bewegungsbezogenen Informationen umfasst.

Bewegungsbezogene Informationen können beispielsweise kontinuierlich oder lückenhaft bereitgestellte Bewegungsinformationen und/oder Daten eines Bewegungsmodells zur Beschreibung von plausiblen Bewegungen und/oder Bewegungsänderungen enthalten.

Bei einer lückenhaften Bereitstellung von Bewegungsdaten können entsprechende Bewegungsmodelle diese Lücken schließen. Liegen Bewegungsdaten lückenhaft vor, so können bewegungsbezogene Informationen neben den lückenhaft vorliegenden Bewegungsdaten auch die durch ein Bewegungsmodell gelieferten, die Lücken schließenden Daten enthalten und/oder im Auswerteprozess zu berechnen ermöglichen. Ein einfaches Bewegungsmodell könnte vorsehen, dass der letzte Geschwindigkeitsvektor während einer Lücke, d.h. bei fehlenden Bewegungsdaten beibehalten wird. Kompliziertere Bewegungsmodelle nutzen zum Beispiel Extrapolationen von Geschwindigkeiten. Geeignete Bewegungsmodelle können auch durch einen Kalman Filter realisiert werden.

Bewegungsbezogene Informationen beschreiben vorzugsweise eine translatorische Bewegung der beweglichen Kommunikationseinrichtung 30.

In einer besonders vorteilhaften Ausführungsform ist die bewegliche Kommunikationseinrichtung 30 dazu ausgebildet, eine Abstandsinformation bezüglich des Abstands zwischen der beweglichen Kommunikationseinrichtung 30 und wenigstens einer weiteren beweglichen Kommunikationseinrichtung 30 zu bestimmen, wobei die positionsbezogene Information die Abstandsinformation umfasst.

In einer weiteren vorteilhaften Ausführungsform ist die bewegliche Kommunikationseinrichtung 30 dazu ausgebildet, von der Auswerteeinrichtung 20 bereitgestellte Positionszusatzinformationen zu empfangen, welche einem ersten Zeitpunkt taₙ zugeordnet sind, wobei der erste Zeitpunkt taₙ vor dem zweiten Zeitpunkt tbₙ liegt, wobei die bewegliche Kommunikationseinrichtung 30 eine Steuereinrichtung 38 umfasst, die dazu ausgebildet ist, eine Positionsinformation für den ersten Zeitpunkt taₙ in Abhängigkeit von der dem ersten Zeitpunkt taₙ zugeordneten Positionsinformation und der dem ersten Zeitpunkt taₙ zugeordneten Positionszusatzinformationen neu zu bestimmen, und die insbesondere ferner dazu ausgebildet ist, eine verbesserte aktuelle Positionsinformation für den zweiten Zeitpunkt tbₙ in Abhängigkeit von der für den ersten Zeitpunkt taₙ neubestimmten Positionsinformation und den von der Bewegungserfassungseinrichtung 33 bereitgestellten bewegungsbezogenen Informationen zu ermitteln.

Es wird ferner eine Auswerteeinrichtung 20 zum Bestimmen und Bereitstellen von Positionszusatzinformationen bereitgestellt, welche dazu ausgebildet ist, positionsbezogene Informationen von wenigstens einer ersten beweglichen Kommunikationseinrichtung 30 zu empfangen, in Abhängigkeit der empfangenen positionsbezogenen Informationen eine Positionszusatzinformation zu bestimmen, die einem ersten Zeitpunkt taₙ zugeordnet ist, und die Positionszusatzinformation zu einer zweiten beweglichen Kommunikationseinrichtung 30 zu übertragen, wobei die Positionszusatzinformation insbesondere dem ersten Zeitpunkt taₙ zugeordnete Korrekturdaten zur verbesserten Positionsbestimmung und/oder dem ersten Zeitpunkt zugeordnete Integritätsinformationen umfasst.

Besonders vorteilhaft ist die Auswerteeinrichtung 20 dazu ausgebildet, das Bestimmen der Positionszusatzinformation durch Ausführen einer Ausgleichsrechnung durchzuführen, insbesondere in Abhängigkeit von positionsbezogenen Informationen, welche die Auswerteeinrichtung 20 von einer Vielzahl beweglicher Kommunikationseinrichtungen 30 empfangen hat.

Ein besonderer Vorteil ist darin zu sehen, dass die Positionszusatzinformationen nicht mittels statischer Kommunikationseinrichtungen auf vorab hochgenau vermessenen und bekannten Positionen gewonnen werden, wie dieses im Stand der Technik zum Beispiel bei GNSS SBAS üblich ist. Über einen längeren Zeitraum angewendet, d.h. bei wiederholtem Ausführen der oben beschriebenen Verfahrensschritte a) bis c), kann das Verfahren initial ohne Vorhandensein von Korrekturwerten starten und die Qualität von Korrekturwerten über die Zeit verbessern, ohne dass Sondermessungen durchgeführt werden müssen und ohne dass spezielle zu überwachende Messaufbauten vorliegen müssen. Das Gesamtsystem kann sich somit selbst kalibrieren.

## Patentansprüche

1. Verfahren zur verbesserten Bestimmung der Position einer beweglichen Kommunikationseinrichtung, mit folgenden Verfahrensschritten:
a) Bereitstellen einer positionsbezogenen Information in einer Vielzahl erster beweglicher Kommunikationseinrichtungen (30), wobei die ersten beweglichen Kommunikationseinrichtungen jeweils eine Empfangseinrichtung (34, 37) aufweisen, die dazu ausgebildet ist, Positionssignale von einer Komponente (40, 50) eines Navigationssystems zu empfangen,
b) Übertragen der positionsbezogenen Information von der Vielzahl erster beweglicher Kommunikationseinrichtungen zu einer Auswerteeinrichtung (20),
c) Bestimmen von Positionszusatzinformationen in Form von Integritätsinformationen und/oder Korrekturdaten, die einem ersten Zeitpunkt zugeordnet sind, durch die Auswerteinrichtung in Abhängigkeit der empfangenen positionsbezogenen Information, wobei die Auswerteeinrichtung eine Ausgleichsrechnung in Abhängigkeit von positionsbezogenen Informationen, welche die Auswerteeinrichtung von der Vielzahl erster beweglicher Kommunikationseinrichtungen empfangen hat, durchführt,
d) Bereitstellen einer dem ersten Zeitpunkt zugeordneten Positionsinformation in einer zweiten beweglichen Kommunikationseinrichtung (30), wobei die ersten beweglichen Kommunikationseinrichtungen und die zweite bewegliche Kommunikationseinrichtung unterschiedliche Einrichtungen sind,
e) Übertragen der dem ersten Zeitpunkt zugeordneten Positionszusatzinformationen von der Auswerteeinrichtung zu der zweiten beweglichen Kommunikationseinrichtung,
f) Bestimmen in der zweiten beweglichen Kommunikationseinrichtung der Integrität der in Schritt d) für den ersten Zeitpunkt bereitgestellten Positionsinformation in Abhängigkeit der Positionszusatzinformation und/oder Neubestimmen in der zweiten beweglichen Kommunikationseinrichtung (30) einer Positionsinformation für den ersten Zeitpunkt (taₙ) in Abhängigkeit der in Schritt d) bereitgestellten, dem ersten Zeitpunkt (taₙ) zugeordneten Positionsinformation und der dem ersten Zeitpunkt (taₙ) zugeordneten Positionszusatzinformation.

2. Verfahren nach Anspruch 1, wobei Schritt a) ein Empfangen von zur Positionsbestimmung der ersten beweglichen Kommunikationseinrichtung einsetzbaren Signalen durch die erste bewegliche Kommunikationseinrichtung umfasst.

3. Verfahren nach einem der Ansprüche 1 oder 2, wobei Schritt a) ein Empfangen von Signalen von einer weiteren ersten beweglichen Kommunikationseinrichtung umfasst, wobei die erste bewegliche Kommunikationseinrichtung aus den empfangenen Signalen eine Entfernung zu der weiteren ersten beweglichen Kommunikationseinrichtung ermitteln kann.

4. Verfahren nach einem der vorstehenden Ansprüche, wobei Schritt a) ein Bestimmen einer Positionsinformation durch die erste bewegliche Kommunikationseinrichtung, sowie gegebenenfalls einer der Positionsinformation zugeordneten Genauigkeit umfasst.

5. Verfahren nach einem der vorstehenden Ansprüche, wobei Schritt a) ein Übertragen eines Signals von einer kurzreichweitigen Sendeeinrichtung zu der ersten beweglichen Kommunikationseinrichtung, insbesondere mittels Nahfeld-Kommunikation, umfasst, und wobei in der ersten beweglichen Kommunikationseinrichtung eine der Sendeeinrichtung zugeordnete Positionsinformation bereitgestellt wird.

6. Verfahren nach Anspruch 5, umfassend ein Bereitstellen, in der ersten beweglichen Kommunikationseinrichtung, von bewegungsbezogenen Informationen, wobei die bewegungsbezogenen Informationen die Bewegung der ersten beweglichen Kommunikationseinrichtung zumindest abschnittsweise nach dem Zeitpunkt des Empfangs eines Signals von der kurzreichweitigen Sendeeinrichtung, und insbesondere bis zu dem ersten Zeitpunkt (taₙ), beschreiben.

7. Verfahren nach einem der vorstehenden Ansprüche, wobei die Freiheitsgrade der Bewegung der ersten beweglichen Kommunikationseinrichtung in vorbestimmter Weise eingeschränkt sind, und wobei die eingeschränkten Freiheitsgrade bei dem Bestimmen von Positionszusatzinformationen berücksichtigt werden.

8. Verfahren nach einem der vorstehenden Ansprüche, wobei die in der zweiten beweglichen Kommunikationseinrichtung von der Auswerteeinrichtung empfangene, dem ersten Zeitpunkt (taₙ) zugeordnete Positionszusatzinformation von der zweiten beweglichen Kommunikationseinrichtung für die Positionsbestimmung der zweiten beweglichen Kommunikationseinrichtung zu einem gegenüber dem ersten Zeitpunkt späteren zweiten Zeitpunkt (tbₙ), gültig für die Position zum Zeitpunkt (tbₙ), nur dann genutzt wird, wenn die Positionszusatzinformation als ausreichend konstant im Zeitraum zwischen dem ersten Zeitpunkt (taₙ) und dem zweiten Zeitpunkt (tbₙ) erkannt oder angenommen wird.

9. Verfahren nach einem der vorstehenden Ansprüche, umfassend
- Bereitstellen, in der zweiten beweglichen Kommunikationseinrichtung, von bewegungsbezogenen Informationen, wobei die bewegungsbezogenen Informationen die Bewegung der zweiten beweglichen Kommunikationseinrichtung zumindest abschnittsweise zwischen dem ersten Zeitpunkt (taₙ) und einem zweiten Zeitpunkt (tbₙ) beschreiben, wobei der erste Zeitpunkt (taₙ) vor dem zweiten Zeitpunkt (tbₙ) liegt, und
- Ermitteln in der zweiten beweglichen Kommunikationseinrichtung (30) einer verbesserten aktuellen Positionsinformation der zweiten beweglichen Kommunikationseinrichtung (30) für den zweiten Zeitpunkt (tbₙ) in Abhängigkeit von der für den ersten Zeitpunkt (taₙ) neubestimmten Positionsinformation und den bereitgestellten bewegungsbezogenen Informationen.

10. Auswerteeinrichtung (20) zum Bestimmen und Bereitstellen von Positionszusatzinformationen, dazu ausgebildet, positionsbezogene Informationen von einer Vielzahl erster beweglicher Kommunikationseinrichtungen (30) zu empfangen, in Abhängigkeit der empfangenen positionsbezogenen Informationen eine Positionszusatzinformation zu bestimmen, die einem ersten Zeitpunkt (taₙ) zugeordnet ist, und die Positionszusatzinformation zu einer zweiten beweglichen Kommunikationseinrichtung (30) zu übertragen, wobei die ersten beweglichen Kommunikationseinrichtungen und die zweite bewegliche Kommunikationseinrichtung unterschiedliche Einrichtungen sind, wobei die Positionszusatzinformation dem ersten Zeitpunkt (taₙ) zugeordnete Korrekturdaten zur verbesserten Positionsbestimmung und/oder dem ersten Zeitpunkt zugeordnete Integritätsinformationen umfasst, und wobei die Auswerteeinrichtung (20) dazu ausgebildet ist, das Bestimmen der Positionszusatzinformation durch Ausführen einer Ausgleichsrechnung in Abhängigkeit von positionsbezogenen Informationen, welche die Auswerteeinrichtung (20) von der Vielzahl erster beweglicher Kommunikationseinrichtungen (30) empfangen hat, durchzuführen.

## Claims

1. A method for improved positioning of a mobile communication device, comprising the method steps of:
a) providing position-related information in a plurality of first mobile communication devices (30), wherein the first mobile communication devices each have a receiving device (34, 37) which is adapted to receive positioning signals from a component (40, 50) of a navigation system;
b) transmitting the position-related information from the plurality of first mobile communication devices to an evaluation device (20);
c) determining, by the evaluation device, supplemental position information in the form of integrity information and/or correction data associated with a first point in time on the basis of the received position-related information, wherein the evaluation device performs a curve fitting calculation on the basis of position-related information received by the evaluation device from the plurality of first mobile communication devices;
d) providing position information associated with the first point in time in a second mobile communication device (30), the first mobile communication devices and the second mobile communication device being distinct devices;
e) transmitting the supplemental position information associated with the first point in time from the evaluation device to the second mobile communication device;
f) determining, in the second mobile communication device, the integrity of the position information provided in step d) for the first point in time on the basis of the supplemental position information; and/or re-determining, in the second mobile communication device (30), position information for the first point in time (taₙ) on the basis of the position information provided in step d) and associated with the first point in time (taₙ) and the supplemental position information associated with the first point in time (taₙ).

2. The method according to claim 1, wherein step a) comprises receiving, by the first mobile communication device, signals that can be used for positioning the first mobile communication device.

3. The method according to claim 1 or 2, wherein step a) comprises receiving signals from a further first mobile communication device, wherein the first mobile communication device is capable of determining a distance to said further first mobile communication device on the basis of the received signals.

4. The method according to any one of the preceding claims, wherein step a) comprises determining, by the first mobile communication device, a position information and optionally an accuracy associated with said position information.

5. The method according to any one of the preceding claims, wherein step a) comprises transmitting a signal from a short-range transmitting device to the first mobile communication device, in particular through near field communication, and wherein position information associated with the transmitting device is provided in the first mobile communication device.

6. The method according to claim 5, comprising providing movement-related information in the first mobile communication device, the movement-related information describing, at least in sections, the movement of the first mobile communication device after the time of reception of a signal from the short-range transmitting device and in particular until the first point in time (taₙ) .

7. The method according to any one of the preceding claims, wherein the degrees of freedom of movement of the first mobile communication device are limited in a predetermined manner, and wherein the limited degrees of freedom are taken into account in the determining of supplemental position information.

8. The method according to any one of the preceding claims, wherein the supplemental position information received in the second mobile communication device from the evaluation device and associated with the first point in time (taₙ) is used by the second mobile communication device for determining the position of the second mobile communication device at a second point in time (tbₙ), which is later than the first point in time, as being valid for the position at said point in time (tbₙ) only if the supplemental position information has been determined or considered as being sufficiently constant over the period between the first point in time (taₙ) and the second point in time (tbₙ).

9. The method according to any one of the preceding claims, comprising
- providing movement-related information in the second mobile communication device, the movement-related information describing at least sections of the movement of the second mobile communication device between the first point in time (taₙ) and a second point in time (tbₙ), wherein the first point in time (taₙ) is earlier than the second point in time (tbₙ); and
- determining, in the second mobile communication device (30), improved current position information for the second mobile communication device (30) for the second point in time (tbₙ) on the basis of the position information re-determined for the first point of time (taₙ) and the provided movement-related information.

10. An evaluation device (20) for determining and providing supplemental position information, adapted to receive position-related information from a plurality of first mobile communication devices (30), to determine supplemental position information associated with a first point in time (taₙ) on the basis of the received position-related information, and to transmit the supplemental position information to a second mobile communication device (30), wherein the first mobile communication devices and the second mobile communication device are distinct devices, the supplemental position information comprising correction data associated with the first point in time (taₙ) for improved positioning and/or integrity information associated with the first point in time, and wherein the evaluation device (20) is adapted to determine the supplemental position information by performing a curve fitting calculation on the basis of position-related information received by the evaluation device (20) from the plurality of first mobile communication devices (30).

## Revendications

1. Procédé destiné à améliorer la détermination de la position d'un dispositif de communication mobile, avec les étapes de procédé suivantes consistant à :
a) mettre à disposition une information relative à une position dans une pluralité de premiers dispositifs de communication (30) mobiles, où les premiers dispositifs de communication mobiles présentent respectivement un dispositif de réception (34, 37) qui est conçu pour recevoir des signaux de position depuis un composant (40, 50) d'un système de navigation,
b) transmettre l'information relative à une position depuis la pluralité de premiers dispositifs de communication mobiles vers un dispositif d'exploitation (20),
c) déterminer des informations supplémentaires de position sous la forme d'informations d'intégrité et/ou de données de correction qui sont attribuées à un premier instant, par le dispositif d'exploitation en fonction de l'information relative à une position reçue, où le dispositif d'exploitation effectue un calcul d'ajustement en fonction d'informations relatives à une position que le dispositif d'exploitation a reçues de la pluralité de premiers dispositifs de communication mobiles,
d) mettre à disposition une information de position attribuée au premier instant dans un second dispositif de communication (30) mobile, où les premiers dispositifs de communication mobiles et le second dispositif de communication mobile sont des dispositifs différents,
e) transmettre les informations supplémentaires de position attribuées au premier instant depuis le dispositif d'exploitation vers le second dispositif de communication mobile,
f) déterminer dans le second dispositif de communication mobile l'intégrité de l'information de position mise à disposition à l'étape d) pour le premier instant en fonction de l'information supplémentaire de position et/ou déterminer à nouveau dans le second dispositif de communication (30) mobile une information de position pour le premier instant (taₙ) en fonction de l'information de position mise à disposition à l'étape d) et attribuée au premier instant (taₙ) et de l'information supplémentaire de position attribuée au premier instant (taₙ) .

2. Procédé selon la revendication 1, dans lequel l'étape a) comprend le fait de réceptionner des signaux pouvant être employés pour déterminer la position du premier dispositif de communication mobile par le premier dispositif de communication mobile.

3. Procédé selon l'une des revendications 1 et 2, dans lequel l'étape a) comprend le fait de réceptionner des signaux depuis un autre premier dispositif de communication mobile, dans lequel le premier dispositif de communication mobile peut établir à partir des signaux reçus une distance par rapport à l'autre premier dispositif de communication mobile.

4. Procédé selon l'une des revendications précédentes, dans lequel l'étape a) comprend le fait de déterminer une information de position par le premier dispositif de communication mobile, ainsi que le cas échéant une exactitude attribuée à l'information de position.

5. Procédé selon l'une des revendications précédentes, dans lequel l'étape a) comprend le fait de transmettre un signal depuis un dispositif d'émission à courte portée vers le premier dispositif de communication mobile, en particulier au moyen d'une communication en champ proche, et dans lequel, dans le premier dispositif de communication mobile, une information de position attribuée au dispositif d'émission est mise à disposition.

6. Procédé selon la revendication 5, comprenant le fait de mettre à disposition, dans le premier dispositif de communication mobile, des informations relatives à un déplacement, où les informations relatives à un déplacement décrivent le déplacement du premier dispositif de communication mobile au moins par sections après l'instant de réception d'un signal depuis le dispositif d'émission à courte portée, et en particulier jusqu'au premier instant (taₙ) .

7. Procédé selon l'une des revendications précédentes, dans lequel les degrés de liberté du déplacement du premier dispositif de communication mobile sont restreints de façon prédéterminée, et dans lequel les degrés de liberté restreints sont pris en compte lors de la détermination d'informations supplémentaires de position.

8. Procédé selon l'une des revendications précédentes, dans lequel l'information supplémentaire de position reçue dans le second dispositif de communication mobile par le dispositif d'exploitation et attribuée au premier instant (taₙ) est utilisée, par le second dispositif de communication mobile, pour déterminer la position du second dispositif de communication mobile à un second instant (tbₙ) ultérieur au premier instant et valable pour la position à l'instant (tbₙ), uniquement lorsque l'information supplémentaire de position a été perçue ou admise comme étant suffisamment constante dans la période entre le premier instant (taₙ) et le second instant (tbₙ).

9. Procédé selon l'une des revendications précédentes, comprenant le fait de
- mettre à disposition, dans le second dispositif de communication mobile, des informations relatives à un déplacement, où les informations relatives à un déplacement décrivent le déplacement du second dispositif de communication mobile au moins par sections entre le premier instant (taₙ) et un second instant (tbₙ), où le premier instant (taₙ) se situe avant le second instant (tbₙ), et
- déterminer dans le second dispositif de communication (30) mobile une information de position actuelle améliorée du second dispositif de communication (30) mobile pour le second instant (tbₙ) en fonction de l'information de position à nouveau déterminée pour le premier instant (taₙ) et des informations relatives à un déplacement mises à disposition.

10. Dispositif d'exploitation (20) destiné à déterminer et mettre à disposition des informations supplémentaires de position, conçu pour recevoir des informations relatives à une position depuis une pluralité de premiers dispositifs de communication (30) mobiles, pour déterminer en fonction des informations relatives à une position reçues une information supplémentaire de position qui est attribuée à un premier instant (taₙ), et pour transmettre l'information supplémentaire de position vers un second dispositif de communication (30) mobile, où les premiers dispositifs de communication mobiles et le second dispositif de communication mobile sont des dispositifs différents, où l'information supplémentaire de position comprend des données de correction attribuées au premier instant (taₙ) en vue d'une détermination de position améliorée et/ou des informations d'intégrité attribuées au premier instant, et où le dispositif d'exploitation (20) est conçu pour effectuer la détermination de l'information supplémentaire de position en exécutant un calcul d'ajustement en fonction d'informations relatives à une position que le dispositif d'exploitation (20) a reçues de la pluralité de premiers dispositifs de communication (30) mobiles.
